# EUROPEAN PATENT APPLICATION

(11) **EP 4 625 167 A1**
(43) Date of publication of application: **01.10.2025**
(21) Application number: 23910220.5
(22) Date of filing: 15.12.2023
(51) Int. Cl.: G06F 9/48

(54) **METHOD FOR PROCESSING COMPUTING TASK, AND RELATED APPARATUS**

(30) Priority: 30.12.2022 CN 202211733515
(71) Applicant: Huawei Technologies Co., Ltd., Shenzhen, Guangdong 518129 (CN)
(72) Inventor: LI, Kuikui, Shenzhen, Guangdong 518129 (CN); ZENG, Qinghai, Shenzhen, Guangdong 518129 (CN); SUN, Fei, Shenzhen, Guangdong 518129 (CN); LOU, Chong, Shenzhen, Guangdong 518129 (CN); CHEN, Weimin, Shenzhen, Guangdong 518129 (CN)
(74) Representative: Pfenning, Meinig & Partner mbB
(86) International application number: PCT/CN2023/139207
(87) International publication number: WO 2024/140290

(57) **Abstract**

A computing task processing method and a related apparatus are provided. The method includes: A management unit determines, based on task requirement information and/or task characteristic information of N computing tasks and a computing power status and/or a network status of at least one computing node, one or more target computing nodes in the at least one computing node and at least one computing task to be executed by each target computing node, where N is an integer greater than or equal to 1; and sends identification information of the corresponding at least one computing task to each target computing node in the one or more target computing nodes. During computing task allocation, the task requirement information and/or the task characteristic information, and the computing power status and/or the network status of the at least one computing node are comprehensively considered, which helps make computing task allocation more proper.

## Description

This application claims priority to Chinese Patent Application No. 202211733515.3, filed with the China National Intellectual Property Administration on December 30, 2022 and entitled "COMPUTING TASK PROCESSING METHOD AND RELATED APPARATUS", which is incorporated herein by reference in its entirety.

### TECHNICAL FIELD

This application relates to the communication field, and in particular, to a computing task processing method and a related apparatus.

### BACKGROUND

Currently, computing load in a wireless network gradually increases, for example, third-party application services such as virtual reality (virtual reality, VR), augmented reality (augmented reality, AR), and cloud gaming, and artificial intelligence (artificial intelligence, AI) inference services. A solution is to offload computing load on an access network side or a terminal side to a computing server at a network edge by using a mobile edge computing (mobile edge computing, MEC) mechanism.

In an existing MEC network architecture, when receiving a computing request, a network generally directly allocates a computing task to a node that can provide a computing service for execution, resulting in improper computing task allocation.

Therefore, a method needs to be urgently provided to make computing task allocation more proper.

### SUMMARY

This application provides a computing task processing method and a related apparatus, to make computing task allocation more proper.

According to a first aspect, this application provides a computing task processing method. The method may be performed by a management unit, or may be performed by a component (such as a chip or a chip system) configured in the management unit, or may be implemented by a logical module or software that can implement all or some functions of the management unit. This is not limited in this application.

The management unit may be a management unit in a communication system, and the communication system includes the management unit, a request node, and at least one computing node.

For example, the method includes: determining, based on task requirement information and/or task characteristic information of N computing tasks and a computing power status and/or a network status of the at least one computing node, one or more target computing nodes in the at least one computing node and at least one computing task in the N computing tasks to be executed by each target computing node, where N is an integer greater than or equal to 1; and sending identification information of the corresponding at least one computing task to each target computing node in the one or more target computing nodes.

In the foregoing technical solution, when determining the one or more target computing nodes configured to execute the N computing tasks, the management unit comprehensively considers the task requirement information and/or the task characteristic information of the N computing tasks, and the computing power status and/or the network status of the at least one computing node. This helps make computing task allocation more proper.

For example, when some computing nodes all meet the task requirement information and/or the task feature information of the computing tasks, the management unit may further compare computing power statuses and/or network statuses of these computing nodes. For example, the management unit may select a computing node whose sum of computing time and transmission time is the smallest among these computing nodes to execute the computing task, where the computing time is obtained based on the computing power status, and the transmission time is obtained based on the network status. This helps improve processing efficiency of the computing task, and improve computing service experience.

The management units mentioned in this application may be deployed at different levels, and ranges of computing nodes managed by management units at different levels are different.

For example, the management unit is deployed in at least one type of the following device: a terminal device, an access network device, a core network device, or an MEC platform.

The terminal device, the access network device, the core network device, and the MEC platform belong to different levels.

Optionally, the at least one computing node includes at least one of the following types: a terminal device, an access network device, a core network device, an MEC platform on an access network side, or an MEC platform on a core network side.

For a range of computing nodes managed by management units at different levels, one of the following designs may be used:
Design 1: The management unit is deployed in a core network device, and the management unit is configured to manage a computing resource on at least one type of the following computing node: a terminal device, an access network device, an MEC platform on an access network side, or an MEC platform on a core network side.
Design 2: The management unit is deployed in an access network device, and the management unit is configured to manage a computing resource on at least one type of the following computing node: a terminal device, an access network device, or an MEC platform on an access network side.
Design 3: The management unit is deployed in an MEC platform, and the management unit is configured to manage a computing resource on at least one type of the following computing node: a terminal device, an MEC platform on an access network side, or an MEC platform on a core network side.

The management unit may be deployed in an edge configuration server (edge configuration server, ECS) of the MEC platform, or an edge enabler client (edge enabler client, EEC) of the terminal device.

It may be understood that, that the management unit manages the computing resource on the at least one computing node may be understood as: performing operations such as authentication, registration, deregistration, maintenance, computing power status query and/or network status query, and update on the at least one computing node; and determining, based on the computing power status and/or the network status of the at least one computing node and the task requirement information and/or the task characteristic information of the N computing tasks, the one or more target computing nodes in the at least one computing node and the at least one computing task to be executed by each target computing node, so that the corresponding at least one computing task is executed by each target computing node.

With reference to the first aspect, in some possible implementations of the first aspect, a computing power status of each computing node is measured by using at least one of the following: a type of a computing resource provided by the computing node, a computing power value, a location of the computing node, a supported task type, a joint service capability, or resource utilization.

Optionally, the joint service capability includes: a storage capability, a network capability, an encoding/decoding capability, or frames per second (frames per second, FPS).

Optionally, the resource utilization includes utilization of a central processing unit, utilization of a graphics processing unit, utilization of a memory, utilization of a disk, a quantity of sessions, or a quantity of request queues.

Optionally, the computing power value includes at least one of the following: inherent computing power of the computing node, current available computing power, or available computing power in a future period of time.

In this application, the computing power is short for a computing capability, and the computing power value may be understood as a computing capability value. A method for representing the computing power value includes any one of the following: operations per second (operations per second, OPS), floating-point operations per second (floating-point operations per second, FLOPS), a clock speed measured in hertz, an input (input)/output (output) (I/O) bandwidth and delay (for example, a quantity of read/write operations per second), heat dissipation design power consumption, a memory capacity, a computing completion probability, an error probability, or the like of a processor.

With reference to the first aspect, in some possible implementations of the first aspect, the network status of each computing node includes at least one of the following: channel status information between the computing node and the request node, a transmission rate, a throughput, a transmission delay, a network congestion status, an available bandwidth, or a status of an interface between nodes.

Optionally, the task requirement information includes at least one of the following: an end-to-end delay, quality of service (quality of service, QoS), an extended reality (extended reality, XR) quality index (quality index) (denoted as XQI), quality of experience (quality of experience, QoE), or a computing power requirement.

The end-to-end delay is duration from time when the computing node initiates a computing request to time when the computing node receives a computing result. The computing power requirement may be, for example, a type of a computing resource required for executing a computing task, a computing power value, a location of a computing node, a joint service capability, or resource utilization.

Optionally, the task characteristic information includes at least one of the following: a frame rate, a bit rate, a resolution, a relative location relationship between an I-frame and a P-frame, an image or video distortion degree, an image or video distortion type, or AI model precision.

The distortion type includes, for example, but not limited to, amplitude distortion, frequency distortion, and phase distortion. This is not limited in this application.

With reference to the first aspect, in some possible implementations of the first aspect, the method further includes: receiving a computing request from a request node, where the computing request carries the task requirement information and/or the task characteristic information of the N computing tasks; and the method further includes: sending the task requirement information and/or the task characteristic information to each target computing node in the one or more target computing nodes.

The computing request may be used to request to execute the N computing tasks, or the computing request is used to request to allocate a target computing node configured to execute the N computing tasks, or the like.

The management unit may send the task requirement information and/or the task characteristic information to each target computing node, so that the target computing node configures a program environment required for executing a computing task.

With reference to the first aspect, in some possible implementations of the first aspect, the computing request further carries split indication information of a first computing task, the split indication information is used by the management unit to split the first computing task into a plurality of second computing tasks, the first computing task is a computing task that is not split, and the second computing task is a computing task obtained through splitting.

It can be learned from the foregoing that the computing task may be split by the management unit, the computing request may carry the split indication information, and the management unit may split the computing task based on the split indication information.

The split indication information includes, for example, indication information indicating a quantity of second computing tasks into which the first computing task is split, and/or indication information indicating a size of each second computing task. For example, for a neural network model, the split indication information may include indication information indicating a quantity of second computing tasks into which the neural network model is split, and the split indication information may further include split point information, that is, layers from which the neural network model is split. For example, if the split point includes a second layer and a fifth layer, a first layer and the second layer may belong to one computing task, and a third layer to the fifth layer may belong to another computing task.

Optionally, the computing task may alternatively be split by the request node. This is not limited in this application.

Optionally, the N computing tasks include one first computing task and/or a plurality of second computing tasks. For example, the N computing tasks may include one first computing task that is not split, or may include a plurality of second computing tasks obtained through splitting.

Optionally, the management unit may obtain the computing power status and the network status of the computing node in one of the following two manners:
Manner 1: The management unit sends a query request to each computing node in the at least one computing node, where the query request is used to request to query a computing power status and a network status of the computing node; and receives a query response from each computing node, where the query response carries the computing power status and the network status of the computing node.
Manner 2: When a first preset condition is met, each computing node in the at least one computing node automatically reports a computing power status and a network status of the computing node. For example, the first preset condition may be a period of reporting the computing power status and the network status by the computing node, and each computing node may report the computing power status and the network status at intervals, or the first preset condition may be another condition that triggers the computing node to report the computing power status and the network status, for example, a parameter used to represent the network status reaches a corresponding threshold. This is not limited in this application.

With reference to the first aspect, in some possible implementations of the first aspect, the method further includes: sending first information to the request node, where the first information indicates each target computing node in the one or more target computing nodes and identification information of at least one computing task corresponding to each target computing node.

The management unit may indicate a correspondence between a target computing node and at least one computing task executed by the target computing node to the request node, for example, <target computing node 1, computing task 1>, <target computing node 2, computing task 3>, and <target computing node 3, computing task 2>, so that the request node sends computing data and/or application information to the corresponding target computing node.

It may be understood that, when a plurality of target computing nodes work collaboratively and the plurality of target computing nodes work serially (that is, when a target computing node executes a computing task, a computing result output by a previous-hop target computing node is required), the management unit may send second information to a first computing node in the one or more target computing nodes, where the second information is used to determine a next-hop node of the first computing node, the next-hop node of the first computing node is configured to execute a computing task based on a computing result output by the first computing node, and the first computing node is any one of the one or more target computing nodes.

The next-hop node of the first computing node may be at least one target computing node in the one or more target computing nodes. The second information may specifically include identification information of the next-hop node of the first computing node.

With reference to the first aspect, in some possible implementations of the first aspect, the method further includes: obtaining at least one type of the following information: real-time application experience information, real-time application characteristic information, or real-time network status information; and sending indication information to a second computing node in the one or more target computing nodes based on the at least one type of information, where the indication information is used by the second computing node to adjust a related application configuration parameter and/or a related network configuration parameter, where the real-time application experience information includes at least one of the following: an end-to-end delay, QoS, an XQI, or QoE; the real-time application characteristic information includes at least one of the following: a frame rate, a bit rate, a resolution, a relative location relationship between an I-frame and a P-frame, an image or video distortion degree, an image or video distortion type, or AI model precision; the real-time network status information includes at least one of the following: channel status information between the computing node and the request node, a transmission rate, a throughput, a transmission delay, a network congestion status, an available bandwidth, or a status of an interface between nodes; the related application configuration parameter includes any one of the following: a frame rate, a bit rate, a resolution, a sending location of an I-frame and/or a P-frame, an image or video distortion degree, or an image or video distortion type; and the related network configuration parameter includes any one of the following: a bit rate, a throughput, a transmission delay, a priority, or a bandwidth.

The management unit indicates, based on the obtained at least one type of information, the second computing node in the one or more target computing nodes to adjust the related application configuration parameter and/or the related network configuration parameter. This helps improve service experience of a user.

Optionally, sending the indication information to the second computing node in the one or more target computing nodes based on the at least one type of information includes: when the at least one type of information meets a preset condition, sending the indication information to the second computing node in the one or more target computing nodes, where the preset condition includes at least one of the following: a parameter in the real-time application experience information is less than a first threshold, a parameter in the real-time application characteristic information is less than a second threshold, or a parameter in the real-time network status information is less than a third threshold.

Each target computing node may report at least one type of information of the target computing node: real-time application experience information, real-time application characteristic information, or real-time network status information. If the at least one type of information of the target computing node meets a preset condition (which may be denoted as a second preset condition), the management unit sends indication information to the target computing node, so that the target computing node adjusts a related application configuration parameter and/or a related network configuration parameter, thereby improving user service experience.

Optionally, one or more of the at least one type of information comes from at least one of the one or more target computing nodes, or one or more of the at least one type of information comes from the request node.

With reference to the first aspect, in some possible implementations of the first aspect, data transmitted between the request node, the management unit, and the at least one computing node may be included in a radio resource control (radio resource control, RRC) protocol message and/or a newly added edge resource control (edge resource control, ERC) protocol message.

Optionally, the RRC protocol message and/or the ERC protocol message may be carried in a computing dedicated radio bearer, where the computing dedicated radio bearer includes a computing radio bearer (computing radio bearer, CRB) and/or a session-less (session-less) data radio bearer (data radio bearer, DRB).

Optionally, before receiving the computing request from the request node, the method further includes: receiving an authentication request from a third computing node, where the authentication request carries identity information of the third computing node, and the third computing node is any one of the at least one computing node; performing identity authentication on the third computing node; and sending an authentication response to the third computing node, where the authentication response carries an authentication result of the third computing node, and the authentication result includes authentication success or authentication failure.

The management unit performs identity authentication on each computing node, which helps improve security.

Optionally, before receiving the computing request from the request node, the method further includes: receiving a registration request from a third computing node, where the registration request carries at least one of the following: a type of a computing resource provided by the third computing node, a computing power value, a location of the third computing node, a supported task type, or a joint service capability; and sending a registration response to the third computing node, where the third computing node is any one of the at least one computing node.

Optionally, the joint service capability includes: a storage capability, a network capability, an encoding/decoding capability, or frames per second, and the computing power value includes at least one of the following: inherent computing power of the computing node, current available computing power, or available computing power in a future period of time.

The computing power is short for a computing capability, and the computing power value may be understood as a computing capability value. A method for representing the computing power value includes any one of the following: operations per second, floating-point operations per second, a clock speed measured in hertz, an I/O bandwidth and delay (for example, a quantity of read/write operations per second), heat dissipation design power consumption, a memory capacity, a computing completion probability, an error probability, or the like of a processor.

Optionally, the registration response carries the first preset condition for triggering the computing node to report the computing power status and the network status to the management unit.

According to a second aspect, this application provides a computing task processing method. The method may be performed by a computing node, or may be performed by a component (such as a chip or a chip system) configured in the computing node, or may be implemented by a logical module or software that can implement all or some functions of the computing node. This is not limited in this application.

The computing node may be any computing node in at least one computing node in a communication system, and the communication system includes the at least one computing node, a management unit, and a request node.

For example, the method includes: determining a computing power status and/or a network status of the computing node, where the computing power status and/or the network status are/is used to determine one or more target computing nodes in at least one computing node and at least one computing task in N computing tasks to be executed by each target computing node, where N is an integer greater than or equal to 1; and sending the computing power status and/or the network status of the computing node to the management unit.

In the foregoing technical solution, the computing node may report the computing power status and the network status of the computing node, so as to determine a target computing node configured to execute a computing task. That is, when the target computing node is determined, a computing power status and a network status of each computing node in the at least one computing node are fully considered. This helps make computing task allocation more proper.

With reference to the second aspect, in some possible implementations of the second aspect, when the computing node is a target computing node, the computing node receives identification information of at least one computing task corresponding to the computing node from the management unit.

Optionally, when the computing node is the target computing node, the computing node may further obtain computing data and third information of the at least one computing task; and execute the at least one computing task based on the computing data and the third information, where the third information includes task requirement information and/or task characteristic information.

Optionally, the task requirement information includes at least one of the following: an end-to-end delay, QoS, an XQI, QoE, or a computing power requirement.

Optionally, the task characteristic information includes at least one of the following: a frame rate, a bit rate, a resolution, a relative location relationship between an I-frame and a P-frame, an image or video distortion degree, an image or video distortion type, or AI model precision.

With reference to the second aspect, in some possible implementations of the second aspect, the task requirement information and the task characteristic information are carried in a computing request sent by the request node to the management unit.

With reference to the second aspect, in some possible implementations of the second aspect, the method further includes: receiving second information from the management unit, where the second information is used to determine a next-hop node of the computing node, and the next-hop node of the computing node is configured to execute a computing task based on a computing result output by the computing node.

The second information may specifically include identification information of the next-hop node of the computing node. The next-hop node of the computing node may be at least one target computing node in the one or more target computing nodes.

It may be understood that, when a plurality of target computing nodes work collaboratively and the plurality of target computing nodes work serially (that is, when a target computing node executes a computing task, a computing result output by a previous-hop target computing node is required), each computing node configured to execute a computing task may receive second information from the management unit, where the second information is used to determine a next-hop node of the computing node.

With reference to the second aspect, in some possible implementations of the second aspect, a computing power status of the computing node is measured by using at least one of the following: a type of a computing resource provided by the computing node, a computing power value, a location of the computing node, a supported task type, a joint service capability, or resource utilization.

Optionally, the joint service capability includes: a storage capability, a network capability, an encoding/decoding capability, or frames per second.

Optionally, the resource utilization includes utilization of a central processing unit, utilization of a graphics processing unit, utilization of a memory, utilization of a disk, a quantity of sessions, or a quantity of request queues.

Optionally, the computing power value includes at least one of the following: inherent computing power of the computing node, current available computing power, or available computing power in a future period of time.

Optionally, the network status of the computing node includes at least one of the following: channel status information between the computing node and the request node, a transmission rate, a throughput, a transmission delay, a network congestion status, an available bandwidth, or a status of an interface between nodes.

Sending the computing power status and the network status of the computing node to the management unit includes the following possible designs:

In a possible design, the method further includes: receiving a query request from the management unit, where the query request is used to request to query the computing power status and the network status of the computing node; and sending a query response to the management unit, where the query response carries the computing power status and the network status of the computing node.

In another possible design, when a first preset condition is met, the computing power status and the network status of the computing node are sent to the management unit.

With reference to the second aspect, in some possible implementations of the second aspect, the method further includes: sending at least one type of the following information to the management unit: real-time application experience information, real-time application characteristic information, or real-time network status information, where the real-time application experience information includes at least one of the following: an end-to-end delay, QoS, an XQI, or QoE; the real-time application characteristic information includes at least one of the following: a frame rate, a bit rate, a resolution, a relative location relationship between an I-frame and a P-frame, an image or video distortion degree, an image or video distortion type, or AI model precision; and the real-time network status information includes at least one of the following: channel status information between the computing node and the request node, a transmission rate, a throughput, a transmission delay, a network congestion status, an available bandwidth, or a status of an interface between nodes.

With reference to the second aspect, in some possible implementations of the second aspect, the method further includes: when the at least one type of information meets a preset condition, receiving indication information from the management unit, where the indication information is used by the computing node to adjust a related application configuration parameter and/or a related network configuration parameter; and adjusting the related application configuration parameter and/or the related network configuration parameter based on the indication information, where the related application configuration parameter includes any one of the following: a frame rate, a bit rate, a resolution, a sending location of an I-frame and/or a P-frame, an image or video distortion degree, or an image or video distortion type; and the related network configuration parameter includes any one of the following: a bit rate, a throughput, a transmission delay, a priority, or a bandwidth.

Optionally, the preset condition includes at least one of the following: a parameter in the real-time application experience information is less than a first threshold, a parameter in the real-time application characteristic information is less than a second threshold, or a parameter in the real-time network status information is less than a third threshold.

Optionally, the method further includes: sending an authentication request to the management unit, where the authentication request carries identity information of the computing node, and the identity information is used by the management unit to perform identity authentication on the computing node; and receiving an authentication response from the management unit, where the authentication response carries an authentication result of the computing node, and the authentication result includes authentication success or authentication failure. Identity authentication is performed on the computing node, which helps improve security.

With reference to the second aspect, in some possible implementations of the second aspect, the method further includes: sending a registration request to the management unit, where the registration request carries at least one of the following: a type of a computing resource provided by the computing node, a computing power value, a location of the computing node, a supported task type, or a joint service capability; and receiving a registration response from the management unit.

The joint service capability includes: a storage capability, a network capability, an encoding/decoding capability, or frames per second.

The computing power value includes at least one of the following: inherent computing power of the computing node, current available computing power, or available computing power in a future period of time.

Optionally, the registration response carries the first preset condition for triggering the computing node to report the computing power status and the network status to the management unit.

According to a third aspect, this application provides a computing task processing method. The method may be performed by a request node, or may be performed by a component (such as a chip or a chip system) configured in the request node, or may be implemented by a logical module or software that can implement all or some functions of the request node. This is not limited in this application.

The request node may be a request node in a communication system, and the communication system includes the request node, at least one computing node, and a management unit.

For example, the method includes: sending a computing request to the management unit, where the computing request carries task requirement information and/or task characteristic information of N computing tasks, and N is an integer greater than or equal to 1; receiving first information from the management unit, where the first information indicates each target computing node in one or more target computing nodes and identification information of at least one computing task corresponding to each target computing node, and each target computing node is configured to execute the corresponding at least one computing task; and sending computing data of the corresponding at least one computing task to the one or more target computing nodes based on the first information.

In the foregoing technical solution, the computing node sends, to the management unit, the computing request that carries the task requirement information and/or the task characteristic information of the N computing tasks, so as to determine a target computing node configured to execute a computing task. That is, when the target computing node is determined, task requirement information and/or task characteristic information of the computing task are fully considered. This helps make computing task allocation more proper.

Optionally, the method further includes: sending application information to the one or more target computing nodes.

With reference to the third aspect, in some possible implementations of the third aspect, the computing request further carries split indication information of a first computing task, the split indication information is used by the management unit to split the first computing task into a plurality of second computing tasks, the first computing task is a computing task that is not split, and the second computing task is a computing task obtained through splitting.

It can be learned from the foregoing that the computing task may be split by the management unit, the computing request may carry the split indication information, and the management unit may split the computing task based on the split indication information.

Optionally, the computing task may alternatively be split by the request node. This is not limited in this application.

Optionally, the N computing tasks include one first computing task and/or a plurality of second computing tasks, the first computing task is a computing task that is not split, and the second computing task is a computing task obtained through splitting.

With reference to the third aspect, in some possible implementations of the third aspect, the method further includes: sending at least one type of the following information to the management unit: real-time application experience information, real-time application characteristic information, or real-time network status information, where the real-time application experience information includes at least one of the following: an end-to-end delay, quality of service QoS, an XQI, or QoE; the real-time application characteristic information includes at least one of the following: a frame rate, a bit rate, a resolution, a relative location relationship between an I-frame and a P-frame, an image or video distortion degree, an image or video distortion type, or AI model precision; the real-time network status information includes at least one of the following: channel status information between the computing node and the request node, a transmission rate, a throughput, a transmission delay, a network congestion status, an available bandwidth, or a status of an interface between nodes.

According to a fourth aspect, this application provides a communication system, including a management unit configured to perform the method according to any one of the first aspect or the possible implementations of the first aspect, a computing node configured to perform the method according to any one of the second aspect or the possible implementations of the second aspect, and a request node configured to perform the method according to any one of the third aspect or the possible implementations of the third aspect; or including a management unit configured to perform the method according to any one of the first aspect or the possible implementations of the first aspect, and a computing node configured to perform the method according to any one of the second aspect or the possible implementations of the second aspect.

According to a fifth aspect, this application provides a computing task processing apparatus, to implement the method in any one of the first aspect to the third aspect and the possible implementations of the first aspect to the third aspect. The apparatus includes a corresponding unit configured to perform the foregoing method. The unit included in the apparatus may be implemented by software and/or hardware.

According to a sixth aspect, this application provides a computing task processing apparatus. The apparatus includes a processor. The processor is coupled to a memory, and may be configured to execute a computer program in the memory, to implement the method according to any one of the first aspect to the third aspect and the possible implementations of the first aspect to the third aspect.

Optionally, the apparatus further includes a communication interface, and the processor is coupled to the communication interface. The communication interface is configured to receive a signal from a communication apparatus other than the apparatus and transmit the signal to the processor, or send a signal from the processor to a communication apparatus other than the apparatus. For example, the communication interface may be a transceiver, a circuit, a bus, a module, or a communication interface of another type.

Optionally, the communication apparatus further includes the memory, and the processor is coupled to the memory. The memory is configured to store program instructions and data.

According to a seventh aspect, this application provides a computer-readable storage medium. The computer storage medium stores a computer program or instructions, and when the computer program or the instructions are run on a computer, the method according to any one of the first aspect to the third aspect and the possible implementations of the first aspect to the third aspect is performed.

According to an eighth aspect, this application provides a computer program product. The computer program product includes a computer program (which may also be referred to as code or instructions), and when the computer program is run, the method according to any one of the first aspect to the third aspect and the possible implementations of the first aspect to the third aspect is performed.

According to a ninth aspect, this application provides a chip system. The chip system includes at least one processor, configured to support implementation of a function in any one of the first aspect to the third aspect and the possible implementations of the first aspect to the third aspect, for example, receiving or processing data in the foregoing method.

In a possible design, the chip system further includes a memory, the memory is configured to store program instructions and data, and the memory is located inside or outside the processor.

The chip system may include a chip, or may include a chip and another discrete component.

It should be understood that technical solutions in the fourth aspect to the ninth aspect of this application correspond to the technical solutions in the first aspect to the third aspect of this application, and beneficial effect achieved by the aspects and corresponding feasible implementations are similar. Details are not described.

### BRIEF DESCRIPTION OF DRAWINGS

FIG. 1 is a diagram of an existing MEC network architecture according to an embodiment of this application;
FIG. 2 is a diagram of a system architecture of a communication system applicable to a method according to an embodiment of this application;
FIG. 3 is a diagram of a possible system architecture of a communication system applicable to a method according to an embodiment of this application;
FIG. 4 is a diagram of a deployment manner of a management unit and a near-real-time RIC (near real-time RIC, NRT-RIC) according to an embodiment of this application;
FIG. 5 is a diagram of deploying a management unit in a base station according to an embodiment of this application;
FIG. 6 is a diagram of computing resources managed by management units on a core network device side and an access network device side according to an embodiment of this application;
FIG. 7 is a diagram of a computing resource managed by a management unit on an MEC platform side according to an embodiment of this application;
FIG. 8 is a schematic flowchart of a computing task processing method according to an embodiment of this application;
FIG. 9 is a detailed schematic flowchart of a computing task processing method according to an embodiment of this application;
FIG. 10 is a block diagram of a computing task processing apparatus according to an embodiment of this application;
FIG. 11 is another block diagram of a computing task processing apparatus according to an embodiment of this application; and
FIG. 12 is a diagram of a structure of an access network device according to an embodiment of this application.

### DESCRIPTION OF EMBODIMENTS

The following describes technical solutions of this application with reference to accompanying drawings.

The method provided in this application may be applied to various communication systems, for example, a long term evolution (long term evolution, LTE) system, an LTE frequency division duplex (frequency division duplex, FDD) system, an LTE time division duplex (time division duplex, TDD) system, and a 5th generation (5th generation, 5G) mobile communication system or a new radio access technology (new radio access technology, NR). The 5G mobile communication system may include non-standalone (non-standalone, NSA) and/or standalone (standalone, SA).

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, the internet of vehicles. Communication modes in an internet of vehicles system are collectively referred to as a vehicle to X (vehicle to X, V2X, where X may represent anything) system. For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

The technical solutions provided in this application may be further applied to a future communication system, for example, a 6th generation (6th Generation, 6G) mobile communication system. This is not limited in this application.

In embodiments of this application, a radio access network (radio access network, RAN) device (which may be referred to as an "access network device" for short below) may be any device having a wireless transceiver function. The radio access network device may be a device that accesses a network by using a 3rd generation partnership project (3rd generation partnership project, 3GPP) technology, for example, including but not limited to a base station (base station), a NodeB (NodeB or NB), an evolved NodeB (evolved NodeB, eNB) in LTE, a gNB or a transmission reception point (transmission reception point, TRP) in a 5G (for example, NR) system, a next generation base station in a 6th generation (6th generation, 6G) mobile communication system, and a base station in a future mobile communication system, may alternatively be a module or unit that completes some functions of the base station, for example, may be a central unit (central unit, CU), or may be a distributed unit (distributed unit, DU). Alternatively, the radio access network device may be a macro base station, a micro base station, a pico base station, a small cell, a balloon station, an indoor station, a relay station, a wireless relay node, a wireless backhaul node, or the like. The radio access network device may alternatively be a device that accesses a network by using a non-3GPP technology, for example, including but not limited to an access point (access point, AP) in a wireless fidelity (wireless fidelity, Wi-Fi) system. It may be understood that all or some functions of the radio access network device in this application may also be implemented by using a software function running on hardware, or may be implemented by using an instantiated virtualization function on a platform (for example, a cloud platform). A specific form of the radio access network device is not limited in this application.

A core network device may be configured to complete three functions: registration, connection, and session management, and mainly includes a network exposure function (network exposure function, NEF) network element, a policy control function (policy control function, PCF) network element, an application function (application function, AF) network element, an access and mobility management function (access and mobility management function, AMF) network element, a session management function (session management function, SMF) network element, a user plane function (user plane function, UPF) network element, and the like.

The UPF network element is an interface of a data network, and may complete functions such as user plane data forwarding, session/flow-level charging statistics, and bandwidth limitation. User data may be accessed to a network by using the network element.

The NEF network element may be configured to expose, to the AF network element, a service and a capability provided by a 3GPP network function, and may also enable the AF to provide information for the 3GPP network function.

The AF network element mainly transfers a requirement of an application side for a network side, and may be considered as a proxy of an application server.

The SMF network element mainly performs session management, user equipment internet protocol (internet protocol, IP) address allocation and management, UPF selection, and the like.

The PCF network element mainly performs policy control on a charging policy, a QoS policy, and the like.

The AMF network element mainly performs functions such as mobility management and access authentication/authorization. In addition, the AMF network element may be further responsible for transferring a user policy between a terminal device and the PCF.

Network elements communicate with each other through interfaces. For example, an interface between the NEF network element and the AF network element is an N33 interface. A signaling plane interface between the terminal device and the AMF network element is an N1 interface. Because the terminal device cannot directly interact with a core network, non-access stratum (non-access stratum, NAS) information needs to be transparently transmitted through an access stratum (access stratum, AS). A signaling plane interface used by the AMF to request an access network (access network, AN) to allocate a resource to a protocol data unit (protocol data unit, PDU) session and the like is an N2 interface.

The foregoing network elements in the core network device and the interfaces between the network elements are merely examples for description, and shall not constitute any limitation on this application.

The data network (data network, DN) can provide an operator service, internet access, or a third-party service.

The terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may include but is not limited to: a mobile phone (mobile phone), a tablet computer (pad), a computer with a wireless transceiver function, a VR device, an AR device, a mixed reality (mixed reality, MR) device, an XR device, a wireless terminal in industrial control (industrial control), a vehicle-mounted device, a wireless terminal in unmanned driving, a wireless terminal in telemedicine (remote medical), a wireless terminal in smart grid (smart grid), a wireless terminal in transportation safety (transportation safety), a wireless terminal in smart city (smart city), a wireless terminal in smart home (smart home), a wearable device, a video player, and a full-series projector. A specific form of the terminal device is not limited in this application.

In this application, a request node in a communication system described below may be a terminal device, an access network device, or the like. This is not limited in this application.

Currently, computing load in a wireless network gradually increases, for example, third-party application services such as VR, AR, and cloud gaming, and AI inference services. A solution is to offload computing load on an access network side or a terminal side to a computing server at a network edge by using an MEC mechanism.

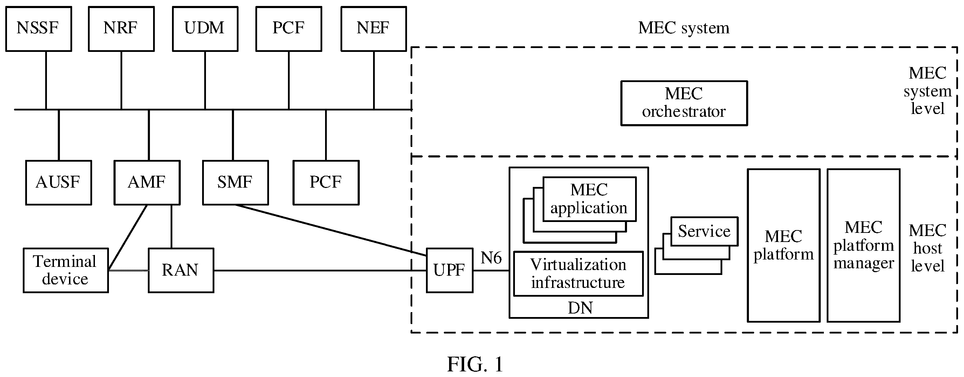

For ease of understanding, the following describes an existing MEC network architecture in detail with reference to FIG. 1.

FIG. 1 is a diagram of an existing MEC network architecture according to an embodiment of this application.

As shown in FIG. 1, a 5G network may include a terminal device part, a DN, and an operator network part. The operator network may include one or more of the following network elements: an authentication server function (authentication server function, AUSF) network element, an NEF network element, a unified data management (unified data management, UDM) network element, a network repository function (network repository function, NRF) network element, an AMF network element, an SMF network element, a RAN network element, a UPF network element, a network slice selection function (network slice selection function, NSSF) network element, and the like. In the foregoing operator network, a part other than a radio access network part may be referred to as a core network part. The UPF network element is a part of an MEC system. The MEC system is divided into two layers: an MEC system level (system level) and an MEC host level (distributed host level). The MEC system level includes an MEC orchestrator (orchestrator), and the MEC host level includes an MEC platform manager (platform manager), an MEC platform (platform), an MEC service (service), an MEC application (App), and a virtualization infrastructure (virtualization infrastructure). The MEC platform, the MEC service, and the MEC application are all provided for an MEC service, and may be collectively referred to as an MEC service system. In a 5G core network protocol, the SMF may control data routing of a PDU session (session), so that the PDU session can have a plurality of N6 interfaces at the same time. A UPF network element connected to each N6 interface is referred to as a PDU session anchor (PDU session anchor, PSA), and each PDU session anchor provides a different path to a same DN. PDU session data transmission between the terminal device and the DN needs to reach a corresponding MEC platform through a corresponding PSA anchor.

The MEC platform can provide an internet technology (internet technology, IT) service environment and a cloud computing capability at the edge of a mobile network, and emphasizes that applications, services, and content can be deployed locally, near-distance, and distributedly, meeting service requirements in scenarios such as terminal connections in 5G enhanced mobile broadband, ultra-reliable and low-latency communication, and massive machine type communication.

The current MEC architecture may have the following disadvantages:
First, from a perspective of computing resource collaboration, resources of a single MEC site are limited, and a plurality of MEC sites lack collaboration and computing resource sharing capabilities. As a result, computing resource utilization is low, and centralized scheduling has poor scalability.
Second, from a perspective of a task requirement, tasks such as XR and cloud gaming require a low delay, a large bandwidth, and high computing power. The current 5G network architecture introduces only a communication quality indicator to improve non-computing performance. In addition, an application layer is decoupled from a network layer. As a result, a network status cannot be sensed, and user experience cannot be ensured. From the terminal to the DN, end-to-end task experience is divided into two parts: from the RAN to the UPF and from the UPF to the DN, and global optimization cannot be implemented.
Third, from a perspective of a network architecture, in a current MEC service mode, a computing task requested by the terminal needs to pass through a UPF function or a PSA on the UPF, and a domain name server (domain name server, DNS) may be required for domain name parsing to reach MEC servers in different DNs. Input or output data between the terminal and an edge server needs to be routed and forwarded by a plurality of gateways or network elements, resulting in a long interaction delay.
Fourth, from a perspective of data security, if an existing MEC mechanism is used to implement RAN artificial intelligence, data collected through the RAN AI needs to be transmitted to a server in the DN by using the UPF for processing, increasing a risk of exposing data inside the network to a third party.

It should be understood that mobile edge computing may also be referred to as multi-access edge computing (multi-access edge computing, MEC). Abbreviations of a Chinese name and an English name of the mobile edge computing are not specifically limited in this application.

The MEC platform may be deployed on a radio access network side (which may be referred to as an MEC platform on an access network side). For example, the MEC platform may be deployed after a node of a single base station, or may be deployed after an aggregation node of a plurality of base stations. This is not limited in this application. The MEC platform may alternatively be deployed on a core network side (which may be referred to as an MEC platform on a core network side). For a specific deployment manner, refer to the conventional technology. Details are not described herein.

In the existing MEC network architecture, when receiving a computing request, a network generally directly allocates a computing task to a node that can provide a computing service for execution, resulting in improper computing task allocation.

To resolve a problem of improper computing task allocation, this application provides a computing task processing method. When allocating N computing tasks, a management unit comprehensively considers task requirement information and/or task characteristic information of the N computing tasks, and a computing power status and/or a network status of at least one computing node, thereby helping make computing task allocation more proper. For example, the management unit may select, from the at least one computing node, a computing node with a best computing power status and a best network status to execute a computing task. This can also improve computing task processing efficiency, thereby helping improve computing service experience.

To better understand embodiments of this application, the following first describes several terms used in embodiments of this application.
1. Computing task: In this application, the computing task includes, for example, but not limited to: image rendering enhancement, AI inference, target detection, target recognition, target classification, behavior prediction, and action decision in a control system. This application includes but is not limited thereto. The computing task may be a computing task in a third-party application service such as VR, AR, or cloud gaming.

In this application, some computing tasks may be split. For example, for a task executed by using a neural network model, if a plurality of neural network layers in the neural network model are split into a plurality of parts, a computing task corresponding to the neural network model is also split into a plurality of computing tasks, for example, denoted as a computing task 1 to a computing task N. In this case, the computing task corresponding to the neural network model may be implemented by executing the computing task 1 to the computing task N (N is an integer greater than 1). For another example, some types of computing tasks may be further split into a plurality of parallel tasks, that is, the plurality of tasks obtained through splitting do not affect each other, and may be independently executed. This is not limited in this application.

It should be understood that, in this application, splitting the computing task may also be understood as decomposing, segmenting, or dividing the computing task, and meanings of the expressions are the same. This is not limited in this application.

2. Computing data: The computing data is data required by a computing node to execute a computing task. The computing data may be classified into raw data, intermediate data, a computing result, or the like. The raw data may be unprocessed data, for example, may be data input into an AI model. The computing result is data output after the raw data is processed by the computing node by executing the computing task. The intermediate data may be data output by an intermediate node when the computing task is split and computing nodes work serially. For example, the neural network model may be specifically data output from another layer other than an input layer and an output layer.

3. Computing node: The computing node is a node configured to provide a computing service and execute a computing task. For example, the computing node may include at least one of the following types: a terminal device, an access network device, a core network device, or an MEC platform, and may be specifically a central processing unit (central processing unit, CPU), a graphics processing unit (graphics processing unit, GPU), a neural network processing unit (neural network processing unit, NPU), or a tensor processing unit (tensor processing unit, TPU) on the foregoing device. This is not limited in this application.

4. Management unit: The management unit may be configured to perform unified management on one or more computing nodes. In embodiments of this application, the management unit may also be referred to as a computing management function (computing management function, CMF).

In addition, in this application, that the management unit performs unified management on the one or more computing nodes may be understood as: performing operations such as authentication, registration, deregistration, maintenance, computing power status query and/or network status query, and update on the one or more computing nodes; and determining, based on a computing power status and/or a network status of the one or more computing nodes and task requirement information and/or task characteristic information of N computing tasks, at least one target computing node in the one or more computing nodes and at least one computing task to be executed by each target computing node, so that the corresponding at least one computing task is executed by each target computing node.

The following describes in detail a method provided in embodiments of this application with reference to the accompanying drawings.

For ease of understanding, the following points are first described.

First, to clearly describe the technical solutions in embodiments of this application, terms such as "first" and "second" are used in embodiments of this application to distinguish between same items or similar items that provide basically same functions and purposes. For example, a first computing node and a second computing node are merely used to distinguish different computing nodes, and a sequence of the first computing node and the second computing node is not limited. A person skilled in the art may understand that the terms such as "first" and "second" do not limit a quantity or an execution sequence, and the terms such as "first" and "second" do not indicate a definite difference.

Second, in embodiments of this application, terms and English acronyms and abbreviations, such as a network status, a computing power status, a computing task, and a CMF, are examples provided for ease of description, and shall not constitute any limitation on this application. This application does not exclude a possibility of defining another term that can implement a same or similar function in an existing or future protocol.

Third, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

Fourth, in embodiments of this application, descriptions such as "when...", "in a case of...", and "if" all mean that a device (for example, a computing node or a management unit described below) performs corresponding processing in an objective case, but are not limited to a time, and do not require that the device (for example, the computing node or the management unit described below) perform a determining action during implementation, and do not mean that there is another limitation. It should be noted that, in embodiments of this application, the foregoing several descriptions may be interchangeably used. This is not limited herein.

Fifth, in embodiments of this application, QoS may be QoS defined in a 5G system, and the QoS may be identified by using a QoS class identifier (QoS class identifier, QCI). A parameter defined by the QoS includes but is not limited to a resource type, a priority, a delay, a packet loss rate, a guaranteed rate, a maximum rate, and the like. It should be noted that the QoS in this application may alternatively be QoS defined in a future system. In other words, the QoS may alternatively be represented by using another performance indicator. Specific content of the parameter defined by the QoS is not limited in this application.

Sixth, in embodiments of this application, AI may be an AI oriented to a wireless network, for example, distributed deployment training and inference in federated learning.

The following describes in detail a communication system provided in an embodiment of this application.

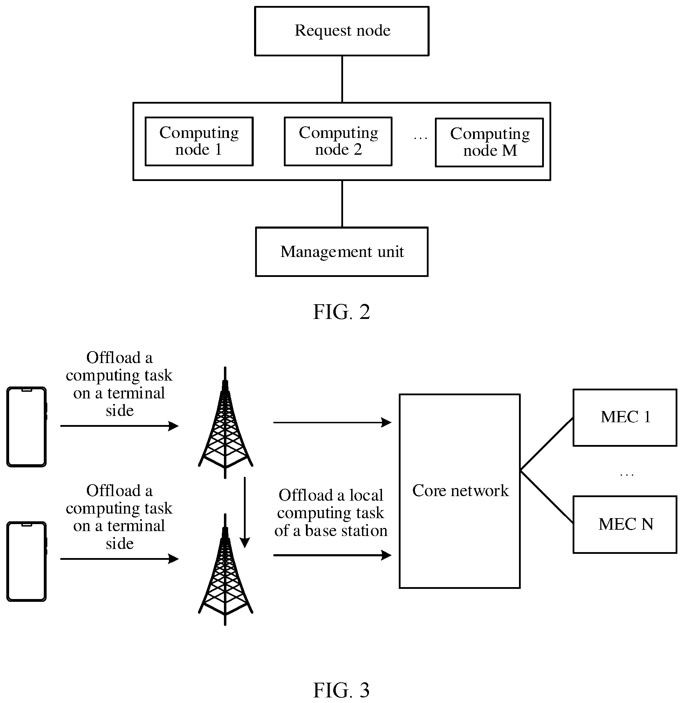

FIG. 2 is a diagram of a system architecture of a communication system applicable to a method according to an embodiment of this application.

As shown in FIG. 2, the communication system includes a request node, at least one computing node (a computing node 1 to a computing node M shown in the figure, where M is a positive integer), and a management unit. The request node may be configured to request one or more computing tasks; each computing node in the at least one computing node may be configured to execute a computing task; and the management unit may be configured to manage the at least one computing node. That the management unit manages the at least one computing node includes but is not limited to: performing operations such as authentication, registration, deregistration, maintenance, computing power status query and/or network status query, update, and computing task allocation on the at least one computing node.

The request node may be, for example, a terminal device or an access network device, and the computing node may be, for example, a terminal device, an access network device, a core network device, an MEC platform on an access network side, or an MEC platform on a core network side. Specific forms of the request node and the computing node are not limited in this application.

The following describes in detail a deployment manner and a specific function of the management unit with reference to FIG. 3. In a communication system shown in FIG. 3, the request node may be, for example, a terminal device, and the computing node may be, for example, a base station, an MEC platform on an access network side, or an MEC platform on a core network side.

As shown in FIG. 3, the communication system includes a terminal device (for example, a mobile phone), an access network device (for example, a base station), a core network device, and MEC (including MEC 1 to MEC N), where N is a positive integer. It should be understood that specific types of the terminal device and the access network device are not limited in this application. All computing resources on the terminal device, the access network device, the core network device, and the MEC may be used to execute a computing task.

It can be learned from FIG. 3 that, in this application, both a computing service on a terminal side and a local computing service of a base station may be offloaded to a computing resource in a network by using the network. The management unit, which may also be referred to as a CMF, is newly added to the communication system. The management unit may manage one or more computing nodes in the terminal device, the access network device, the core network device, and the MEC platform. The following describes the specific function and the deployment manner of the management unit in detail.

The specific function of the management unit includes the following:
1. Sense task requirement information and/or task characteristic information of a computing task, where the task requirement information includes but is not limited to a task type, an end-to-end delay requirement, a QoS requirement, an XQI, QoE, a computing power requirement, or the like; and the task characteristic information includes but is not limited to a frame rate, a bit rate, a resolution, a relative location relationship between an I-frame and a P-frame, an image or video distortion degree, an image or video distortion type, AI model precision, or the like.
2. Sense a network status of a computing node, which includes, for example, a RAN status and a core network status, and more specifically, may include an uplink and/or downlink air interface channel status, a network congestion status, an available bandwidth, a transmission rate, or a throughput. The congestion status may be related information about a queue length of a data packet in a buffer (buffer) of each protocol stack, that is, related information about a buffer status report (buffer status report, BSR).
3. Sense a computing power status of a computing node, which includes, for example, a type of a computing resource, a computing power value, a location of the computing node, a supported task type, a joint service capability, or resource utilization.

The joint service capability includes: a storage capability, a network capability, an encoding/decoding capability, or frames per second.

The resource utilization includes utilization of a central processing unit, utilization of a graphics processing unit, utilization of a memory, utilization of a disk, a quantity of sessions, or a quantity of request queues.

The computing power value includes at least one of the following: inherent computing power of the computing node, current available computing power, or available computing power in a future period of time.

4. Allocate a computing task, which includes, for example, splitting the computing task into computing tasks of different sizes; and determining, based on a computing power status and/or a network status of at least one computing node, one or more target computing nodes in the at least one computing node and at least one computing task to be executed by each target computing node.

5. Manage a computing node, which includes, for example, registration, maintenance, query, and update of the computing node and a provided business/service identifier (service ID, SID).

The deployment manner of the management unit is as follows:
In general, the management unit may be deployed on a RAN device side and controlled by the RAN device; the management unit may be deployed on a core network device side and controlled by the core network device; or the CMF may be deployed on an MEC platform side and controlled by an ECS of the MEC platform. When the management unit is deployed on the RAN device side, the management unit may be deployed inside the RAN device, or may be used as an independent module outside the RAN device.

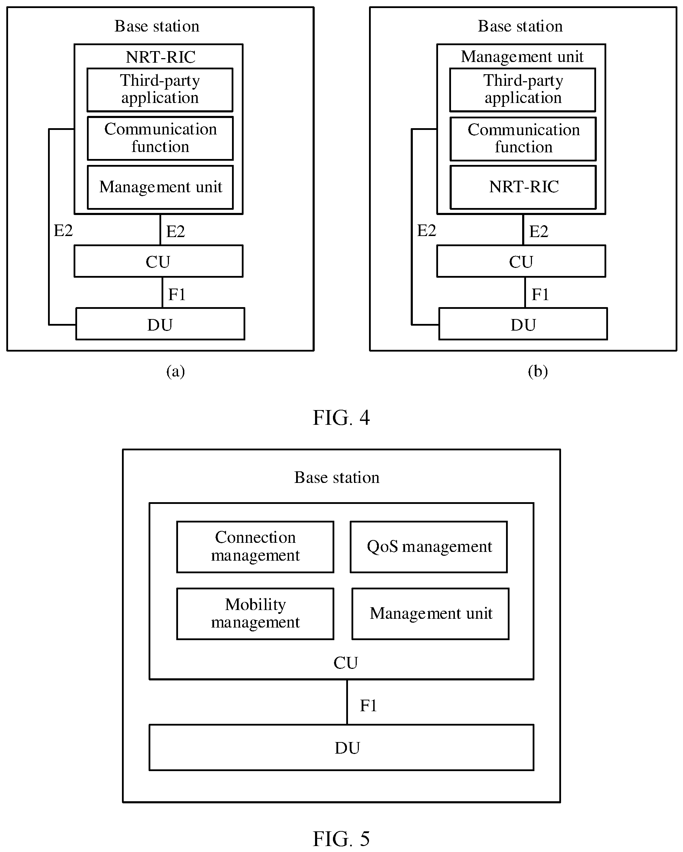

It may be understood that, in an Open-RAN (O-RAN) architecture, a base station is configured with a RAN intelligent controller (RAN intelligent controller, RIC), and the RIC includes an NRT-RIC and a non-real-time RIC (non-real-time RIC, Non-RT RIC). The following uses the NRT-RIC as an example to describe in detail how to deploy the management unit in the Open-RAN architecture with reference to FIG. 4.

In a possible design, as shown in (a) in FIG. 4, the management unit is deployed in the NRT-RIC, that is, the NRT-RIC integrates a computing management function and runs a third-party application. The NRT-RIC may further include a communication function. E2 and F1 are communication interfaces.

In another possible design, as shown in (b) in FIG. 4, the NRT-RIC is deployed in the management unit, that is, the management unit integrates an NRT-RIC function and runs a third-party application. The management unit may further include a communication function. E2 and F1 are communication interfaces.

Similarly, the management unit is deployed in the non-RT RIC, that is, the non-RT RIC integrates a computing management function and runs a third-party application. Alternatively, the non-RT RIC is deployed in the management unit, that is, the management unit integrates a non-RT RIC function and runs a third-party application.

Optionally, the management unit may alternatively be deployed in a terminal device, for example, may be deployed in a communication module such as a modem (modem) of the terminal device.

FIG. 5 is a diagram of deploying a management unit in a base station according to an embodiment of this application.

As shown in FIG. 5, the management unit may be deployed in the base station, for example, may be deployed in a CU of the base station, that is, the CU integrates a computing management function. It can be learned that the CU may be further responsible for connection management, QoS management, mobility management, and the like. This is not limited in this application.

It can be learned from the foregoing that the management unit may be located at different network layers or locations (for example, a core network device side or an access network device side). It may be understood that management units located at different layers may manage computing nodes at different layers or in different ranges, to construct a hierarchical communication architecture. Details are as follows:
1. The management unit is deployed on a core network device side (which may be referred to as a non-access stratum CMF (non-access stratum CMF, NAS-CMF) or a CN-CMF).
   In this design, the NAS-CMF manages a computing resource on at least one type of the following computing node: an access network device, an MEC platform on an access network side, an MEC platform on a core network side, or a terminal device. For example, the NAS-CMF may manage a computing resource in a baseband unit (baseband unit, BBU) of the base station or a CU of the base station.
2. The management unit is deployed on an access network device side (which may be referred to as an access stratum CMF (access stratum CMF, AS-CMF) or an AN-CMF).

In this design, the AS-CMF manages a computing resource on at least one type of the following computing node: an access network device, an MEC platform on an access network side, or a terminal device. For example, the AS-CMF may manage a computing resource in a BBU of the base station, a CU of the base station, or a DU of the base station.

Optionally, the AS-CMF includes an intra-base-station CMF and an inter-base-station CMF. The intra-base-station CMF may be configured to manage computing nodes in a same distributed radio access network (distributed RAN, D-RAN) or cloud radio access network (cloud RAN, C-RAN) architecture; and the inter-base-station CMF may be configured to manage computing nodes in different D-RAN architectures or C-RAN architectures in a unified manner.

When the management unit is deployed on the access network device side, data transmitted between the terminal device, the base station, and the MEC on the access network device side may be included in an RRC protocol message and/or a newly added ERC protocol message. The RRC protocol message and/or the ERC protocol message may be carried in a computing dedicated radio bearer, and the computing dedicated radio bearer includes a CRB and/or a session-less DRB.

It can be learned that the foregoing data may be locally closed on a RAN side without bypassing by using a core network function, establishing a PDU session, or the like. This helps reduce a delay.

3. The management unit is deployed on an MEC platform side.

The management unit may be integrated in an ECS of an MEC or an EEC of a terminal device.

In this design, the management unit may be configured to manage a computing resource on an MEC platform on an access network side, an MEC platform on a core network side, an edge cloud, or a terminal device.

Optionally, the management unit may alternatively be deployed in a communication module of the terminal device, and a series of AT (attention) commands need to be predefined for data transmission between terminal devices. The AT command is used to control a modem. A command line used in each modem starts with "AT".

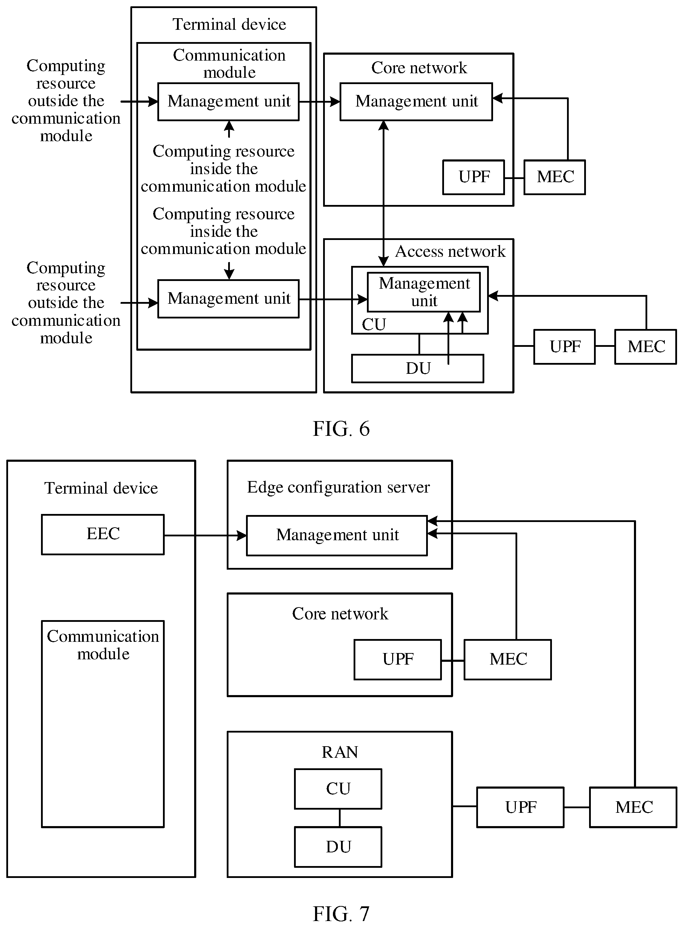

With reference to FIG. 6 and FIG. 7, the following describes in detail ranges of computing resources managed by management units at different layers.

FIG. 6 is a diagram of computing resources managed by management units on a core network device side and an access network device side according to an embodiment of this application.

As shown in FIG. 6, the management unit on the core network side may manage a computing resource on an access network device, an MEC platform on an access network side, an MEC platform on a core network side, or a terminal device. The management unit on the access network side may manage the computing resource on the access network device, the MEC platform on the access network side, or the terminal device. A management unit located in a communication module of the terminal device may manage a computing resource at a terminal granularity, for example, a computing resource inside the communication module and a computing resource outside the communication module.

FIG. 7 is a diagram of a computing resource managed by a management unit on an MEC platform side according to an embodiment of this application.

As shown in FIG. 7, the management unit may be integrated in an ECS of an MEC or an EEC of a terminal device. The management unit may be configured to manage a computing resource on an MEC platform on an access network device side, an MEC platform on a core network side, or a terminal device.

The following describes in detail a computing task processing method provided in embodiments of this application with reference to the accompanying drawings.

The following embodiments show the computing task processing method provided in this application from a perspective of interaction between a management unit, a computing node, and a request node, but shall not constitute any limitation on the method provided in this application.

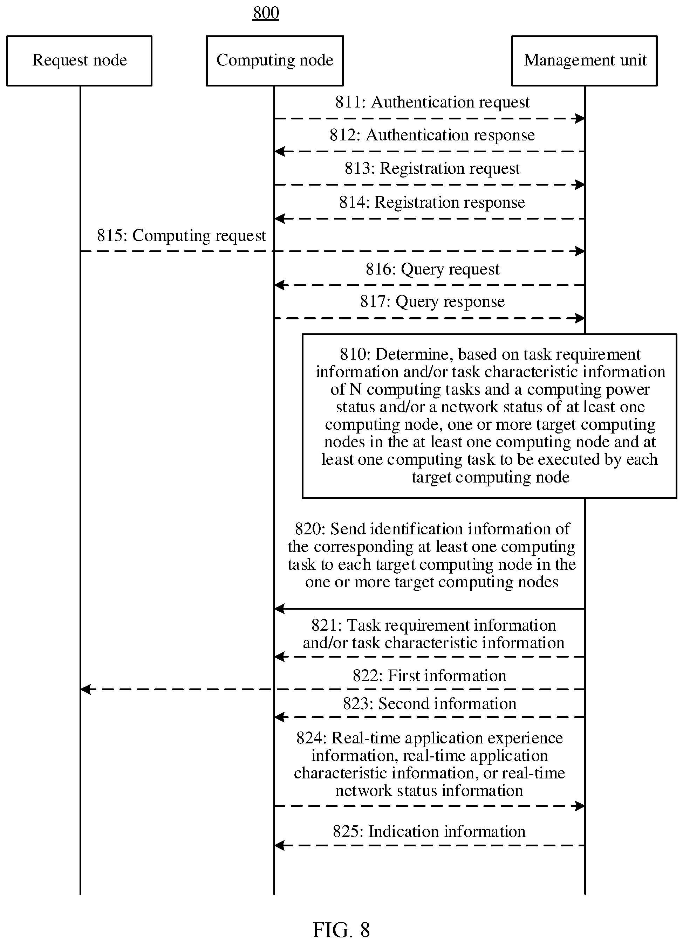

FIG. 8 is a schematic flowchart of a computing task processing method 800 according to an embodiment of this application. The following describes in detail steps in the method 800.

Step 810: Determine, based on task requirement information and/or task characteristic information of N computing tasks and a computing power status and/or a network status of at least one computing node, one or more target computing nodes in the at least one computing node and at least one computing task to be executed by each target computing node.

Each target computing node in the one or more target computing nodes corresponds to at least one computing task in one or more computing tasks, and each target computing node is configured to execute the corresponding at least one computing task. N is an integer greater than or equal to 1.

A computing power status of each computing node is measured by using at least one of the following: a type of a computing resource provided by the computing node, a computing power value, a location of the computing node, a supported task type, a joint service capability, or resource utilization.

Optionally, the joint service capability includes: a storage capability, a network capability, an encoding/decoding capability, or frames per second, the resource utilization includes utilization of a central processing unit, utilization of a graphics processing unit, utilization of a memory, utilization of a disk, a quantity of sessions, or a quantity of request queues, and the computing power value includes at least one of the following: inherent computing power of the computing node, current available computing power, or available computing power in a future period of time.

The encoding/decoding capability refers to encoding and decoding capabilities. The period of time of the available computing power in the future period of time may be a period of time preset in a protocol, or may be a period of time determined by two communication parties through negotiation. This is not limited in this application.

The type of the computing resource may be classified according to a physical hardware type, for example, including but not limited to a CPU, a GPU, an NPU, and a TPU. Optionally, the information about the type of the computing resource may further include parameter information such as a model, a memory, and a clock speed of the hardware.

It should be understood that, in this embodiment of this application, the computing power is short for a computing capability, and the computing power value may be understood as a computing capability value. The computing power may be directly expressed as operations per second or floating-point operations per second of a processor. Optionally, the computing power value may further include: a clock speed measured in hertz, an I/O bandwidth and delay (for example, a quantity of read/write operations per second), heat dissipation design power consumption measured in watt, a memory capacity measured in byte, a computing completion probability, an error probability, or the like. The supported task type includes but is not limited to: image and video rendering, AI training, AI inference, perception processing, high-performance computing, and big data offline analysis.

It may be understood that the computing power status of each computing node may be represented by using a weighted result of the foregoing plurality of dimensions. In a possible implementation, the computing power status may be represented by using a weighted sum of parameters of the foregoing plurality of dimensions. For example, computing resources provided by different chips may be mapped to a unified dimension by using a preset measurement function, or may be directly represented by using a value of each of the plurality of dimensions. This is not limited in this embodiment of this application.

The network status of each computing node includes at least one of the following: channel status information between the computing node and the request node, a transmission rate, a throughput, a transmission delay, a network congestion status, an available bandwidth, or a status of an interface between nodes.

That the management unit determines, based on the task requirement information and/or the task characteristic information of the N computing tasks and the computing power status and/or the network status of the at least one computing node, the one or more target computing nodes in the at least one computing node and the at least one computing task to be executed by each target computing node includes the following several possible designs:
In a possible design, the management unit may determine, from the at least one computing node, computing nodes that meet task requirement information and/or task characteristic information. For these computing nodes, the management unit determines computing times based on computing power statuses, determines transmission times based on network statuses, and uses a computing node ranked top in ascending order of sums of the computing times and the transmission times as a target computing node to execute a computing task, where each target computing node is configured to execute the at least one computing task in the one or more computing tasks. A correspondence between a target computing node and a computing task may be, for example, <target computing node 1, computing task 1>, <target computing node 2, computing task 3>, and <target computing node 3, computing task 2>.

For example, computing tasks include a computing task 1 and a computing task 2, a task requirement of the computing task 1 includes that remaining computing resources on a computing node exceed 20%, and a task requirement of the computing task 2 includes that remaining computing resources on a computing node exceed 50%. In this case, the management unit may determine, from the at least one computing node, computing nodes that meet the task requirement. For example, a computing node 1 and a computing node 2 meet the requirement of the computing task 1, and a computing node 3 and a computing node 4 meet the requirement of the computing task 2. However, if a sum of a computing time and a transmission time of the computing node 1 and the computing node 3 is smaller, the computing node 1 executes the computing task 1, and the computing node 3 executes the computing task 2.

In another possible design, the management unit may determine, from the at least one computing node, computing nodes that meet task requirement information and/or task characteristic information. For these computing nodes, the management unit maps, based on a predefined mapping function, computing power statuses of the computing nodes to function values, that is, maps the computing power statuses to a unified dimension, sorts the computing nodes based on the function values, and uses a computing node ranked top as a target computing node to execute a computing task; and if the function values are the same, may continue to compare network statuses, and select a computing node with a better network status as the target computing node.

For example, computing tasks include a computing task 1 and a computing task 2, a task requirement of the computing task 1 includes that remaining computing resources on a computing node exceed 20%, and a task requirement of the computing task 2 includes that remaining computing resources on a computing node exceed 50%. In this case, the management unit may determine, from the at least one computing node, computing nodes that meet the task requirement. For example, a computing node 1 and a computing node 2 meet the requirement of the computing task 1, and a computing node 3 and a computing node 4 meet the requirement of the computing task 2. However, if a network status of the computing node 1 is better than a network status of the computing node 2, and a network status of the computing node 3 is better than a network status of the computing node 4, the computing node 1 executes the computing task 1, and the computing node 3 executes the computing task 2. The management unit may determine, by comparing parameters used to represent the network status, that the network status of the computing node 1 is better than the network status of the computing node 2, and the network status of the computing node 3 is better than the network status of the computing node 4.

In still another possible design, the management unit may determine, from the at least one computing node, computing nodes that meet task requirement information and/or task characteristic information. For these computing nodes, the management unit predefines priorities for parameters of computing power statuses and network statuses of the computing nodes, and compares the computing power statuses and the network statuses of the computing nodes in descending order of priorities. For example, if priorities of computing power values of the computing nodes are higher than priorities of locations of the computing nodes, the management unit preferentially compares the computing power values of the computing nodes, and preferentially selects a computing node with larger computing power to execute a computing task; and if the computing power values are consistent, continues to compare the locations of the computing nodes.

It should be understood that a specific policy used by the management unit to determine the one or more target computing nodes is not specifically limited in this embodiment of this application.

Optionally, before step 810, the method 800 may further include step 815: The request node sends a computing request to the management unit. Correspondingly, the management unit receives the computing request from the request node, where the computing request carries the task requirement information and/or the task characteristic information of the N computing tasks. After step 820, the method 800 further includes step 821: Send the task requirement information and/or the task characteristic information to each target computing node in the one or more target computing nodes. Correspondingly, the target computing node receives the task requirement information and/or the task characteristic information from the management unit.

The computing request may be used to request to execute the N computing tasks, or the computing request is used to request to allocate a target computing node configured to execute the N computing tasks, or the like. The request node may be, for example, a terminal device or an access network device.

Optionally, types of the N computing tasks include, for example, but not limited to: image rendering enhancement, AI inference, target detection, target recognition, target classification, behavior prediction, and action decision in a control system. The type of the computing task is not limited in this application.

For example, the request node initiates the computing request to the management unit, to request to execute the one or more computing tasks. Correspondingly, the management unit receives the computing request from the request node.

It may be understood that each computing node needs to know task requirement information and/or task characteristic information of a computing task, where the task requirement information and/or the task characteristic information are/is used to configure a program environment required for executing the corresponding computing task.

In a possible design, the computing request carries task requirement information and/or task characteristic information of the one or more computing tasks. After determining a target computing node configured to execute the one or more computing tasks, the management unit sends the task requirement information and/or the task characteristic information to the corresponding target computing node, so that the target computing node configures a program environment required for executing the computing task.

Optionally, the task requirement information includes at least one of the following: an end-to-end delay, QoS, an XQI, QoE, or a computing power requirement. The end-to-end delay is duration from time when the computing node initiates a computing request to time when the computing node receives a computing result. The computing power requirement may be, for example, a type of a computing resource required for executing a computing task, a computing power value, a location of a computing node, a joint service capability, or resource utilization.

Optionally, the task characteristic information includes at least one of the following: a frame rate, a bit rate, a resolution, a relative location relationship between an I-frame and a P-frame, an image or video distortion degree, an image or video distortion type, or AI model precision. The distortion type includes, for example, but not limited to, amplitude distortion, frequency distortion, and phase distortion. This is not limited in this application.

Optionally, the one or more computing tasks include one first computing task and/or a plurality of second computing tasks, the first computing task is a computing task that is not split, and the second computing task is a computing task obtained through splitting.

The computing request may further carry split indication information of the first computing task, and the split indication information is used by the management unit to split the first computing task into the plurality of second computing tasks.

For example, the split indication information may include indication information indicating a quantity of second computing tasks into which the first computing task is split, and/or the split indication information may include indication information indicating a size of the second computing task. For example, the first computing task is a computing task for a neural network model, and the split indication information may include indication information indicating a quantity of second computing tasks into which the first computing task is split, and split point information in the neural network model, that is, layers from which the neural network model is split. For example, if the split point includes a second layer and a fifth layer, a first layer and the second layer may belong to one computing task, and a third layer to the fifth layer may belong to another computing task.

It may be understood that the neural network model may include a plurality of neural network layers, and the first layer, the second layer, and the like are neural network layers of the neural network model. Based on different categories, neural network models may be classified into a deep neural network (deep neural network, DNN) model, a convolutional neural network (convolutional neuron network, CNN) model, a recurrent neural network (recurrent neural network, RNN) model, and the like. This application includes but is not limited thereto. The DNN model is used as an example. The DNN model includes a plurality of neural network layers, and the plurality of neural network layers may include one or more convolution layers, one or more pooling layers, one or more fully connected layers, one or more activation layers, and the like. Neural network layers included in various neural network models are not limited in this application.

That is, the computing task may be split by the request node, or may be split by the management unit. This is not limited in this application.

For example, the computing request carries task requirement information and/or task characteristic information and split indication information of a first computing task. After receiving the computing request, the management unit may split the first computing task into a plurality of second computing tasks based on the first computing task and the split indication information. For example, the computing request carries a structure of the neural network model and the split indication information. The management unit may split the first computing task into the plurality of second computing tasks based on the structure of the neural network model and the split indication information (for example, a first layer and a second layer belong to one computing task, and a third layer to a fifth layer belong to another computing task), where the first layer and the second layer are executed by a target computing node, and the third layer to the fifth layer are executed by another target computing node.

Optionally, the management unit may obtain the computing power status and the network status of the computing node in one of the following two manners:
Manner 1: The management unit may further perform step 816 and step 817 shown in FIG. 8, to obtain the computing power status and the network status of the computing node: send a query request to each computing node in the at least one computing node, where the query request is used to request to query a computing power status and a network status of the computing node; and receive a query response from each computing node, where the query response carries the computing power status and the network status of the computing node.
Manner 2: When a first preset condition is met, each computing node in the at least one computing node automatically reports a computing power status and a network status of the computing node. For example, the first preset condition may be a period of reporting the computing power status and the network status by the computing node, and each computing node may report the computing power status and the network status at intervals, or the first preset condition may be another condition that triggers the computing node to report the computing power status and the network status. This is not limited in this application.

For computing data required by each target computing node for executing a corresponding computing task, after receiving a corresponding target computing node that executes each computing task and sent by the management unit, the request node may send the computing data required for executing the computing task to the corresponding target computing node, so that the target computing node executes the computing task.

Optionally, the request node may further send application information to the one or more target computing nodes. The application information is application information corresponding to a computing task, for example, an operation instruction set.

Optionally, after step 820, the method 800 may further include step 822: The management unit may further send first information to the request node. Correspondingly, the request node receives the first information from the management unit, where the first information indicates each target computing node in the one or more target computing nodes and identification information of at least one computing task corresponding to each target computing node.

For example, the management unit may indicate a correspondence between a target computing node and at least one computing task executed by the target computing node to the request node, for example, <target computing node 1, computing task 1>, <target computing node 2, computing task 3>, and <target computing node 3, computing task 2>, so that the request node sends computing data and/or application information to the corresponding target computing node. For example, the request node needs to know a target computing node to which the request node is to send the computing data and/or the application information, and the computing data sent by the request node may further carry an identifier of the target computing node.

It may be understood that, when a plurality of target computing nodes work collaboratively and the plurality of target computing nodes work serially (that is, when a target computing node executes a computing task, a computing result output by a previous-hop target computing node is required), the method 800 may further include step 823: The management unit may send second information to a first computing node in the one or more target computing nodes, where the second information is used to determine a next-hop node of the first computing node, the next-hop node of the first computing node is configured to execute a computing task based on a computing result output by the first computing node, and the first computing node is any one of the one or more target computing nodes.

The next-hop node of the first computing node may be at least one target computing node in the one or more target computing nodes. The second information may specifically include identification information of the next-hop node of the first computing node.

A sequence of step 821, step 822, and step 823 is not limited in this application.

Step 820: Send identification information of the corresponding at least one computing task to each target computing node in the one or more target computing nodes.

After determining the one or more target computing nodes configured to execute the one or more computing tasks, the management unit sends the identification information of the corresponding at least one computing task to each target computing node, to indicate the target computing node to execute the corresponding computing task. The identification information of the computing task may be, for example, a number of the computing task. This is not limited in this application, provided that the computing task can be identified.

It may be understood that the request node may subsequently send content of the computing task and required computing data to the target computing node.

Optionally, before receiving the computing request from the request node, the method 800 further includes step 811: Receive an authentication request from a third computing node, where the authentication request carries identity information of the third computing node, and the third computing node is any one of the at least one computing node; and perform identity authentication on the third computing node; and the method 800 further includes step 812: Send an authentication response to the third computing node, where the authentication response carries an authentication result of the third computing node, and the authentication result includes authentication success or authentication failure.

For example, for a computing node, the computing node may send an authentication request to the management unit, where the authentication request carries identity information of the computing node, and the management unit receives the authentication request from the computing node. Further, the management unit performs identity authentication on the management unit, and sends an authentication result to the management unit, for example, authentication success or authentication failure.

Optionally, before receiving the computing request from the request node, the method 800 further includes step 813: Receive a registration request from a third computing node, where the registration request carries at least one of the following: a type of a computing resource provided by the third computing node, a computing power value, a location of the third computing node, a supported task type, or a joint service capability; and the method 800 further includes step 814: Send a registration response to the third computing node.

The joint service capability includes: a storage capability, a network capability, an encoding/decoding capability, or frames per second. The computing power value includes at least one of the following: inherent computing power of the computing node, current available computing power, or available computing power in a future period of time. The third computing node is any one of the at least one computing node. The period of time may be a period of time preset in a protocol, or may be a period of time determined by two communication parties through negotiation. This is not limited in this application.

For example, for a computing node, the computing node may send a registration request to the management unit, where the registration request carries a type of a computing resource provided by the third computing node, a computing power value, a location of the third computing node, a supported task type, a joint service capability, or the like. Correspondingly, the management unit receives the registration request from the computing node. Further, the management unit sends a registration response to the computing node.

Optionally, the registration response carries a first preset condition for triggering the third computing node to report a computing power status and a network status to the management unit.

That is, the registration response sent by the management unit carries the first preset condition for triggering the third computing node to report the computing power status and the network status to the management unit. When the first preset condition is met, the third computing node may actively report the computing power status and the network status of the third computing node.

The first preset condition may be a period of reporting the computing power status and the network status by the computing node, and each computing node may report the computing power status and the network status at intervals, or the first preset condition may be another condition that triggers the computing node to report the computing power status and the network status, for example, a parameter used to represent the network status reaches a corresponding threshold. This is not limited in this application.

Optionally, the method 800 further includes step 824: The management unit obtains at least one type of the following information: real-time application experience information, real-time application characteristic information, or real-time network status information; and sends indication information to a second computing node in the one or more target computing nodes based on the at least one type of information, where the indication information is used by the second computing node to adjust a related application configuration parameter and/or a related network configuration parameter, where the real-time application experience information includes at least one of the following: an end-to-end delay, QoS, an XQI, or QoE; the real-time application characteristic information includes at least one of the following: a frame rate, a bit rate, a resolution, a relative location relationship between an I-frame and a P-frame, an image or video distortion degree, an image or video distortion type, or AI model precision; the real-time network status information includes at least one of the following: channel status information between the computing node and the request node, a transmission rate, a throughput, a transmission delay, a network congestion status, an available bandwidth, or a status of an interface between nodes; the related application configuration parameter includes any one of the following: a frame rate, a bit rate, a resolution, a sending location of an I-frame and/or a P-frame, an image or video distortion degree, or an image or video distortion type; and the related network configuration parameter includes any one of the following: a bit rate, a throughput, a transmission delay, a priority, or a bandwidth.

For example, the management unit receives at least one type of the following information reported by a target computing node: real-time application experience information, real-time application characteristic information, or real-time network status information, to send indication information to the target computing node based on the at least one type of information, so as to adjust a related application configuration parameter and/or a related network configuration parameter. After receiving the indication information, the target computing node may adjust the related application configuration parameter and/or the related network configuration parameter. In this way, user service experience is improved.

Optionally, the method 800 may further include step 825: That the management unit sends the indication information to the second computing node in the one or more target computing nodes based on the at least one type of information includes: when the at least one type of information meets a preset condition, sending the indication information to the second computing node in the one or more target computing nodes, where the preset condition includes at least one of the following: a parameter in the real-time application experience information is less than a first threshold, a parameter in the real-time application characteristic information is less than a second threshold, or a parameter in the real-time network status information is less than a third threshold.

In a possible example, after receiving the at least one type of information reported by a target computing node, the management unit determines that the bandwidth in the network status information is less than a corresponding threshold, and may indicate the target computing node to reduce a bit rate to half.

Optionally, one or more of the at least one type of information comes from at least one of the one or more target computing nodes, or one or more of the at least one type of information comes from the request node.

It may be understood that the target computing node may report the at least one type of information. In addition, the request node, for example, a terminal device, may also report the at least one type of information. This is not limited in this application.

It should be further understood that the parameter in the real-time application experience information may be the same as the parameter in the task requirement information, the parameter in the real-time application characteristic information may be the same as the parameter in the task characteristic information, and the parameter in the real-time network status information may be the same as the parameter in the network status. However, specific values of the parameters may be different. For example, a resolution requirement in the task characteristic information is 1920x1080, but the resolution in the real-time application characteristic information may not meet the requirement, for example, only 1280x720.

Optionally, data transmitted between the request node, the management unit, and the at least one computing node may be included in an RRC protocol message, and/or a newly added ERC protocol message.

The ERC may alternatively be parallel to an RRC protocol layer, and the ERC may alternatively belong to a protocol layer of a newly introduced compute plane (compute plane). In this application, the ERC protocol message may be used to carry a request for a computing task, a computing power status and/or a network status of a computing node, an allocation result of the computing task, computing data, or the like.

The RRC protocol message and/or the ERC protocol message may be carried in a computing dedicated radio bearer, and the computing dedicated radio bearer includes a CRB and/or a session-less DRB.

The CRB corresponds to the ERC protocol message. The ERC protocol message may be carried in the CRB. The ERC protocol message may be used to carry a request for a computing task, a computing power status and/or a network status of a computing node, an allocation result of the computing task, computing data, or the like. In other words, the CRB may carry both control plane data such as the request for the computing task, the computing power status and/or the network status of the computing node, and the allocation result of the computing task, and user plane data such as the computing data required for the computing task. This is not limited in this application. For example, a control plane message such as a message related to computing resource management, computing request, orchestration, and allocation may be transmitted by using one CRB; and user plane data such as the computing data required for the computing task and the application information may be transmitted by using one or more other CRBs.

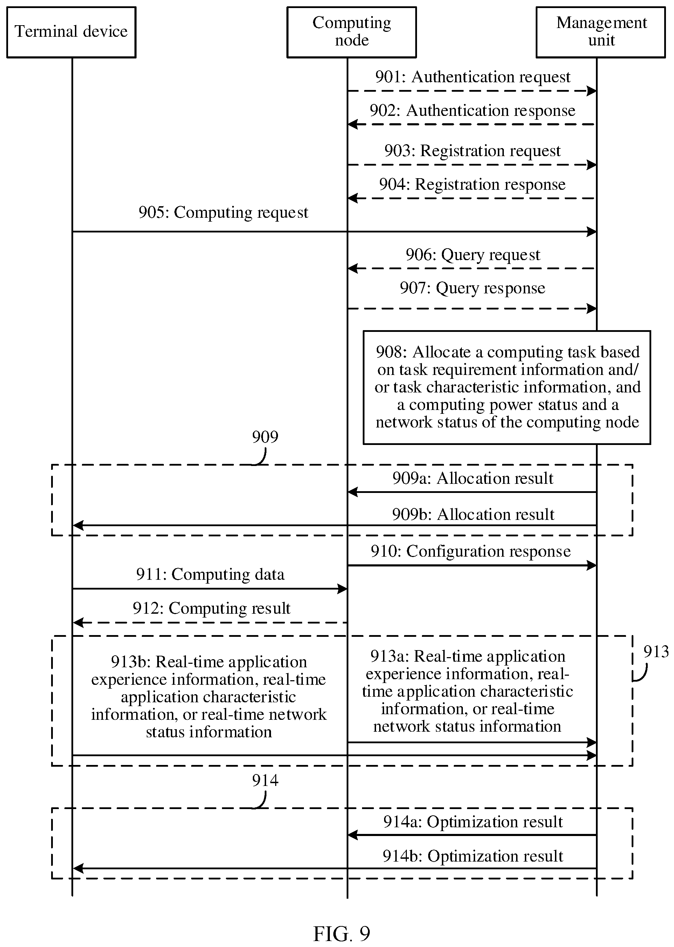

FIG. 9 is a schematic flowchart of a computing task processing method according to an embodiment of this application. In the embodiment shown in FIG. 9, an example in which a request node is a terminal device is used. In addition, FIG. 9 shows an example of one computing node, but should not constitute any limitation on this application. There may be one or more computing nodes, and each computing node may perform steps performed by the computing node shown in FIG. 9.

Step 901: The computing node sends an authentication request to a management unit. Correspondingly, the management unit receives the authentication request from the computing node.

The authentication request may carry identity information of the computing node, and the identity information is used to perform identity authentication on the computing node.

After receiving the authentication request, the management unit performs identity authentication on the computing node.

Step 902: The management unit sends an authentication response to the computing node. Correspondingly, the computing node receives the authentication response from the management unit.

The authentication response carries an authentication result of the computing node, and the authentication result includes authentication success or authentication failure.

Step 901 and step 902 are optional steps, and the management unit may directly use authentication based on an initial handshake between network elements, or authentication on the terminal device by a core network device. This is not limited in this application.

Step 903: The computing node sends a registration request to the management unit. Correspondingly, the management unit receives the registration request from the computing node.

The registration request may carry at least one of the following: a type of a computing resource, a computing power value, a location of a computing node, a supported task type, or a joint service capability.

Optionally, the joint service capability includes: a storage capability, a network capability, an encoding/decoding capability, or frames per second, and the computing power value includes at least one of the following: inherent computing power of the computing node, current available computing power, or available computing power in a future period of time. The period of time may be a period of time preset in a protocol, or may be a period of time determined by two communication parties through negotiation. This is not limited in this application. For more detailed descriptions of a process in which the computing node registers with the management unit, refer to the related descriptions in FIG. 8. Details are not described herein.

Step 904: The management unit sends a registration response to the computing node. Correspondingly, the computing node receives the registration response from the management unit.

Optionally, the registration response may carry a first preset condition for triggering the computing node to report a computing power status and a network status to the management unit.

In a possible example, the registration response may carry a period in which the computing node reports the computing power status and the network status to the management unit, and the computing node may report the computing power status and the network status at intervals.

In another possible example, the first preset condition may be another condition for triggering the computing node to report the computing power status and the network status, for example, a threshold of a parameter used to represent the network status. This is not limited in this application.

It may be understood that step 903 and step 904 are optional steps, that is, each computing node may not be pre-registered. Before allocating a computing task, the management unit may obtain a computing power status of each computing node by using step 906 and step 907, for example, a type of a computing resource that can be provided by the computing node, a computing power value, a location of the computing node, a supported task type, or a joint service capability.

Step 905: The terminal device sends a computing request to the management unit. Correspondingly, the management unit receives the computing request from the terminal device.

The computing request is used to request to execute one or more computing tasks.

The computing request may carry task requirement information and/or task characteristic information. The task requirement information includes at least one of the following: an end-to-end delay, QoS, an XQI, QoE, or a computing power requirement.

The task characteristic information includes at least one of the following: a frame rate, a bit rate, a resolution, a relative location relationship between an I-frame and a P-frame, an image or video distortion degree, an image or video distortion type, or AI model precision.

The computing request may carry split indication information of the computing task, and the split indication information indicates to split the requested computing task into a plurality of computing tasks. For more detailed descriptions of the split indication information, refer to the corresponding descriptions in FIG. 8. Details are not described herein. The request may further carry a transmission throughput, a delay, a reliability index, and the like of intermediate data between computing tasks obtained through splitting.

Step 906: The management unit sends a query request to the computing node. Correspondingly, the computing node receives the query request from the management unit.

The query request is used to request to query the computing power status and the network status of the computing node. For more detailed descriptions of the computing power status and the network status, refer to the related descriptions in FIG. 8.

Step 907: The computing node sends a query response to the management unit. Correspondingly, the management unit receives the query response from the computing node.

The query response carries the computing power status and the network status of the computing node.

Optionally, step 906 and step 907 may be replaced with the following: When the first preset condition is met, the computing node actively reports the computing power status and the network status of the computing node. For descriptions of the first preset condition, refer to the foregoing descriptions. Details are not described herein.

Step 908: The management unit allocates a computing task based on the task requirement information and/or the task characteristic information, and the computing power status and the network status of the computing node.

The management unit may allocate, based on the task requirement information and/or the task characteristic information and the computing power status and the network status of each computing node in the at least one computing node managed by the management unit, one or more computing tasks requested in the computing request. For a specific method, refer to the related descriptions in FIG. 8. Details are not described herein. For example, an allocation result may be represented by using an association relationship of {<computing node, computing task number>, ...}. For example, the management unit divides a computing task into a computing task 1, a computing task 2, and a computing task 3, and an allocation result may be {<terminal device, computing task 1>, <base station, computing task 2>, <MEC, computing task 3>}, that is, a device-edge-cloud collaborative computing task.

Alternatively, a computing task may be split by the terminal device. The management unit determines, based on the task requirement information and/or the task characteristic information and the computing power status and the network status of each computing node in the at least one computing node managed by the management unit, a plurality of target computing nodes configured to execute a plurality of computing tasks.

Step 909: The management unit delivers an allocation result.

Step 909 specifically includes: Step 909a: The management unit sends the allocation result to the computing node, where the computing node is a node that executes the computing task. Step 909b: The management unit sends the allocation result to the terminal device, so that the terminal device sends computing data and/or application information to the corresponding computing node.

It may be understood that the management unit may alternatively notify the computing node of only a next hop of the computing node, where the next hop is configured to execute the computing task based on a computing result output by the computing node.

Optionally, the management unit may further send the task requirement information and/or the task characteristic information of the computing task to the computing node, so that the computing node configures a program environment required for executing the computing task.

Step 910: The computing node sends a configuration response to the management unit.

After configuring the program environment required for executing the computing task, the computing node may send the configuration response to the management unit.

Step 911: The terminal device sends the computing data to the computing node.

The terminal device may upload the computing data to one or more collaborative computing nodes based on the allocation result. If there are a plurality of computing nodes, the computing data may be forwarded to another node by using one node.

Optionally, the terminal device may further send the application information to the computing node. For details, refer to the related descriptions in FIG. 8.

Step 912: The computing node sends the computing result to the terminal device.

Step 913: The computing node and/or the terminal device send/sends real-time application experience information, real-time application characteristic information, and real-time network status information to the management unit.

The real-time application experience information includes at least one of the following: an end-to-end delay, QoS, an XQI, or QoE; the real-time application characteristic information includes at least one of the following: a frame rate, a bit rate, a resolution, a relative location relationship between an I-frame and a P-frame, an image or video distortion degree, an image or video distortion type, or AI model precision; and the real-time network status information includes at least one of the following: channel status information between the computing node and the request node, a transmission rate, a throughput, a transmission delay, a network congestion status, an available bandwidth, or a status of an interface between nodes.

Step 914: The management unit delivers an optimization result.

The management unit determines a recommended related application configuration parameter and/or a recommended related network configuration parameter based on the real-time application experience information, the real-time application characteristic information, and the real-time network status information, so as to improve user experience.

The optimization result includes a related application configuration parameter and/or a related network configuration parameter recommended by the management unit, where the related application configuration parameter includes any one of the following: a frame rate, a bit rate, a resolution, a sending location of an I-frame and/or a P-frame, an image or video distortion degree, or an image or video distortion type; and the related network configuration parameter includes any one of the following: a bit rate, a throughput, a transmission delay, a priority, or a bandwidth.

Step 914 specifically includes: Step 914a: The management unit sends the optimization result to the computing node. Step 914b: The management unit sends the optimization result to the terminal device.

In the foregoing technical solution, when determining the one or more target computing nodes configured to execute the one or more computing tasks, the management unit comprehensively considers the task requirement information and/or the task characteristic information of the one or more computing tasks, and the computing power status and/or the network status of the at least one computing node. This helps make computing task allocation more proper. For example, the management unit may select, from the at least one computing node, a computing node with a better computing power status and a better network status to execute a computing task. This can also improve computing task processing efficiency, thereby helping improve computing service experience.

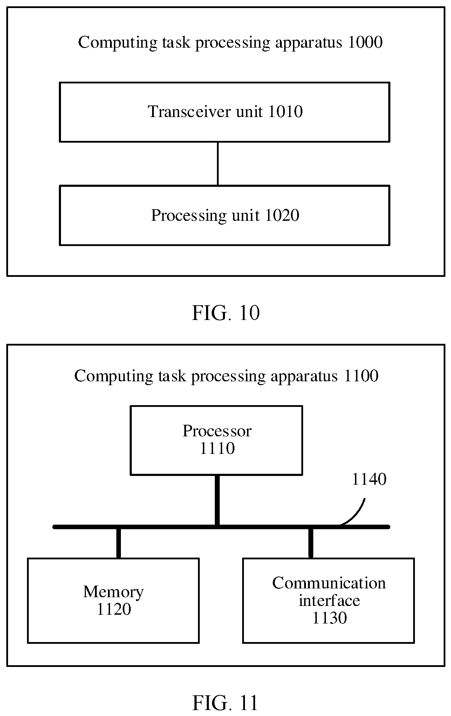

The following describes in detail an apparatus provided in embodiments of this application with reference to FIG. 10 to FIG. 12.

FIG. 10 is a block diagram of a computing task processing apparatus according to an embodiment of this application. As shown in FIG. 10, the apparatus 1000 may include a transceiver unit 1010 and a processing unit 1020. The apparatus 1000 may be configured to perform steps performed by the management unit, the computing node, or the request node in the method shown in FIG. 8 or FIG. 9.

For example, when the apparatus 1000 is configured to perform the steps performed by the management unit in the method shown in FIG. 8, the processing unit 1020 may be configured to determine, based on task requirement information and/or task characteristic information of N computing tasks and a computing power status and/or a network status of at least one computing node, one or more target computing nodes in the at least one computing node and at least one computing task in the N computing tasks to be executed by each target computing node, where N is an integer greater than or equal to 1; and the transceiver unit 1010 is configured to send identification information of the corresponding at least one computing task to each target computing node in the one or more target computing nodes. It may be understood that the foregoing method may be implemented by using one or more units, and the one or more units may be placed together, or may be placed in different apparatuses.

Optionally, a computing power status of each computing node is measured by using at least one of the following: a type of a computing resource provided by the computing node, a computing power value, a location of the computing node, a supported task type, a joint service capability, or resource utilization.

Optionally, the task requirement information includes at least one of the following: a task type, an end-to-end delay, QoS, an XQI, QoE, or a computing power requirement.

Optionally, the task characteristic information includes at least one of the following: a frame rate, a bit rate, a resolution, a relative location relationship between an I-frame and a P-frame, an image or video distortion degree, an image or video distortion type, or AI model precision.

Optionally, the transceiver unit 1010 is further configured to receive a computing request from a request node, where the computing request carries the task requirement information and/or the task characteristic information of the N computing tasks; and the transceiver unit 1010 is further configured to send the task requirement information and/or the task characteristic information to each target computing node in the one or more target computing nodes.

Optionally, the computing request further carries split indication information of a first computing task, the split indication information is used by the apparatus 1000 to split the first computing task into a plurality of second computing tasks, the first computing task is a computing task that is not split, and the second computing task is a computing task obtained through splitting.

Optionally, the N computing tasks include one first computing task and/or a plurality of second computing tasks.

Optionally, the transceiver unit 1010 is further configured to send a query request to each computing node in the at least one computing node, where the query request is used to request to query a computing power status and/or a network status of the computing node; and receive a query response from each computing node, where the query response carries the computing power status and/or the network status of the computing node.

Optionally, the transceiver unit 1010 is further configured to send first information to the request node, where the first information indicates each target computing node in the one or more target computing nodes and identification information of at least one computing task corresponding to each target computing node.

Optionally, the transceiver unit 1010 is further configured to send second information to a first computing node in the one or more target computing nodes, where the second information is used to determine a next-hop node of the first computing node, the next-hop node of the first computing node is configured to execute a computing task based on a computing result output by the first computing node, and the first computing node is any one of the one or more target computing nodes.

Optionally, the transceiver unit 1010 is further configured to: obtain at least one type of the following information: real-time application experience information, real-time application characteristic information, or real-time network status information; and send indication information to a second computing node in the one or more target computing nodes based on the at least one type of information, where the indication information is used by the second computing node to adjust a related application configuration parameter and/or a related network configuration parameter, where the real-time application experience information includes at least one of the following: an end-to-end delay, QoS, an XQI, or QoE; the real-time application characteristic information includes at least one of the following: a frame rate, a bit rate, a resolution, a relative location relationship between an I-frame and a P-frame, an image or video distortion degree, an image or video distortion type, or AI model precision; the real-time network status information includes at least one of the following: channel status information between the computing node and the request node, a transmission rate, a throughput, a transmission delay, a network congestion status, an available bandwidth, or a status of an interface between nodes; the related application configuration parameter includes any one of the following: a frame rate, a bit rate, a resolution, a sending location of an I-frame and/or a P-frame, an image or video distortion degree, or an image or video distortion type; and the related network configuration parameter includes any one of the following: a bit rate, a throughput, a transmission delay, a priority, or a bandwidth.

Optionally, the transceiver unit 1010 is specifically configured to: when the at least one type of information meets a preset condition, send the indication information to the second computing node in the one or more target computing nodes, where the preset condition includes at least one of the following: a parameter in the real-time application experience information is less than a first threshold, a parameter in the real-time application characteristic information is less than a second threshold, or a parameter in the real-time network status information is less than a third threshold.

Optionally, one or more of the at least one type of information comes from at least one of the one or more target computing nodes, or one or more of the at least one type of information comes from the request node.

For example, when the apparatus 1000 is configured to perform the steps performed by the computing node, the processing unit 1020 is configured to determine a computing power status and/or a network status, where the computing power status and/or the network status are/is used to determine one or more target computing nodes in at least one computing node and at least one computing task in N computing tasks to be executed by each target computing node, where N is an integer greater than or equal to 1; and the transceiver unit 1010 is configured to send the computing power status and the network status to a management unit. It may be understood that the foregoing method may be implemented by using one or more units, and the one or more units may be placed together, or may be placed in different apparatuses.

Optionally, the transceiver unit 1010 is further configured to: when the apparatus 1000 is a target computing node, receive identification information of at least one computing task corresponding to the apparatus 1000 from the management unit.

Optionally, the processing unit 1020 is further configured to: obtain computing data and third information of the at least one computing task; and execute the at least one computing task based on the computing data and the third information, where the third information includes task requirement information and/or task characteristic information.

Optionally, the task requirement information includes at least one of the following: an end-to-end delay, QoS, an XQI, QoE, or a computing power requirement.

Optionally, the task characteristic information includes at least one of the following: a frame rate, a bit rate, a resolution, a relative location relationship between an I-frame and a P-frame, an image or video distortion degree, an image or video distortion type, or AI model precision.

Optionally, the task requirement information and the task characteristic information are carried in a computing request sent by the request node to the management unit.

Optionally, the transceiver unit 1010 is further configured to receive second information from the management unit, where the second information is used to determine a next-hop node of the computing node, and the next-hop node of the computing node is configured to execute a computing task based on a computing result output by the computing node.

Optionally, the computing power status is measured by using at least one of the following: a type of a computing resource, a computing power value, a location of the computing node, a supported task type, a joint service capability, or resource utilization.

Optionally, the transceiver unit 1010 is specifically configured to: receive a query request from the management unit, where the query request is used to request to query the computing power status and/or the network status of the apparatus 1000; and send a query response to the management unit, where the query response carries the computing power status and/or the network status of the apparatus 1000.

Optionally, the transceiver unit 1010 is further configured to send at least one type of the following information to the management unit: real-time application experience information, real-time application characteristic information, or real-time network status information, where the real-time application experience information includes at least one of the following: an end-to-end delay, QoS, an XQI, or QoE; the real-time application characteristic information includes at least one of the following: a frame rate, a bit rate, a resolution, a relative location relationship between an I-frame and a P-frame, an image or video distortion degree, an image or video distortion type, or AI model precision; and the real-time network status information includes at least one of the following: channel status information between the computing node and the request node, a transmission rate, a throughput, a transmission delay, a network congestion status, an available bandwidth, or a status of an interface between nodes.

Optionally, the processing unit 1020 is further configured to: when the at least one type of information meets a preset condition, receive indication information from the management unit, where the indication information is used by the computing node to adjust a related application configuration parameter and/or a related network configuration parameter; and adjust the related application configuration parameter and/or the related network configuration parameter based on the indication information, where the related application configuration parameter includes any one of the following: a frame rate, a bit rate, a resolution, a sending location of an I-frame and/or a P-frame, an image or video distortion degree, or an image or video distortion type; and the related network configuration parameter includes any one of the following: a bit rate, a throughput, a transmission delay, a priority, or a bandwidth.

Optionally, the preset condition includes at least one of the following: a parameter in the real-time application experience information is less than a first threshold, a parameter in the real-time application characteristic information is less than a second threshold, or a parameter in the real-time network status information is less than a third threshold.

For example, when the apparatus 1000 is configured to perform the steps performed by the request node, the transceiver unit 1010 is configured to: send a computing request to a management unit, where the computing request carries task requirement information and/or task characteristic information of N computing tasks, and N is an integer greater than or equal to 1; receive first information from the management unit, where the first information indicates each target computing node in one or more target computing nodes and identification information of at least one computing task corresponding to each target computing node, and each target computing node is configured to execute the corresponding at least one computing task; and send computing data of the corresponding at least one computing task to the one or more target computing nodes based on the first information. It may be understood that the foregoing method may be implemented by using one or more units, and the one or more units may be placed together, or may be placed in different apparatuses.

Optionally, the transceiver unit 1010 is further configured to send application information to the one or more target computing nodes.

Optionally, the computing request further carries split indication information of a first computing task, the split indication information is used by the management unit to split the first computing task into a plurality of second computing tasks, the first computing task is a computing task that is not split, and the second computing task is a computing task obtained through splitting.

Optionally, the N computing tasks include one first computing task and/or a plurality of second computing tasks, the first computing task is a computing task that is not split, and the second computing task is a computing task obtained through splitting.

Optionally, the transceiver unit 1010 is further configured to send at least one type of the following information to the management unit: real-time application experience information, real-time application characteristic information, or real-time network status information, where the real-time application experience information includes at least one of the following: an end-to-end delay, QoS, an XQI, or QoE; the real-time application characteristic information includes at least one of the following: a frame rate, a bit rate, a resolution, a relative location relationship between an I-frame and a P-frame, an image or video distortion degree, an image or video distortion type, or AI model precision; and the real-time network status information includes at least one of the following: channel status information between the computing node and the request node, a transmission rate, a throughput, a transmission delay, a network congestion status, an available bandwidth, or a status of an interface between nodes.

It should be understood that, in embodiments of this application, division into the units is an example, and is merely logical function division. During actual implementation, another division manner may be used. In addition, functional units in embodiments of this application may be integrated into one processor, each of the units may exist alone physically, or two or more units may be integrated into one unit. The integrated unit may be implemented in a form of hardware, or may be implemented in a form of a software functional module.

FIG. 11 is another block diagram of a computing task processing apparatus according to an embodiment of this application.

As shown in FIG. 11, the apparatus 1100 may include at least one processor 1110, configured to implement a function of a management unit and a function of a computing node or a request node in the method provided in embodiments of this application.

The apparatus 1100 may further include at least one memory 1120, configured to store program instructions and/or data. The memory 1120 is coupled to the processor 1110. The coupling in this embodiment of this application may be an indirect coupling or a communication connection between apparatuses, units, or modules in an electrical form, a mechanical form, or another form, and is used for information exchange between the apparatuses, the units, or the modules. The processor 1110 and the memory 1120 may operate cooperatively. The processor 1110 may execute the program instructions stored in the memory 1120. At least one of the at least one memory may be included in the processor.

The communication apparatus 1100 may further include a communication interface 1130, configured to communicate with another device by using a transmission medium, so that the communication apparatus 1100 can communicate with another device. The communication interface 1130 may be, for example, a transceiver, an interface, a bus, a circuit, or an apparatus that can implement receiving and sending functions. The processor 1110 may receive and send data and/or information through the communication interface 1130, and is configured to implement the method performed by the management unit, the computing node, or the request node in the embodiment corresponding to FIG. 8 or FIG. 9.

For example, when the apparatus 1100 is configured to implement the functions of the management unit in the method shown in FIG. 8, the processor 1110 may be configured to: determine, based on task requirement information and/or task characteristic information of N computing tasks and a computing power status and/or a network status of at least one computing node, one or more target computing nodes in the at least one computing node and at least one computing task in the N computing tasks to be executed by each target computing node, where N is an integer greater than or equal to 1; and the commnication interface 1130 is configured to send identification information of the corresponding at least one computing task to each target computing node in the one or more target computing nodes.

A specific connection medium between the processor 1110, the memory 1120, and the communication interface 1130 is not limited in this embodiment of this application. In this embodiment of this application, in FIG. 11, the processor 1110, the memory 1120, and the communication interface 1130 are connected by using a bus 1140. The bus 1140 is represented by a bold line in FIG. 11, and a manner of connection between other components is merely described as an example, and constitutes no limitation. The bus may be classified into an address bus, a data bus, a control bus, and the like. For ease of representation, only one bold line is used to represent the bus in FIG. 11, but this does not mean that there is only one bus or only one type of bus.

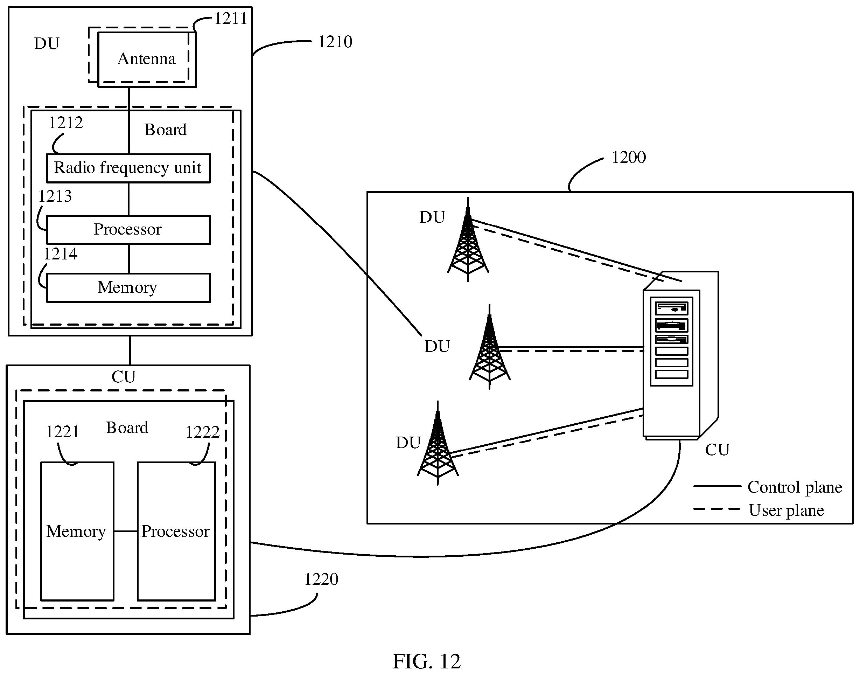

FIG. 12 is a diagram of a structure of an access network device according to an embodiment of this application, for example, may be a diagram of a structure of a base station. As shown in the figure, the base station 1200 may include one or more DUs 1210 and one or more CUs 1220. The CU 1220 may communicate with a next generation core (NG core, NC). The DU 1210 may include at least one antenna 1211, at least one radio frequency unit 1212, at least one processor 1213, and at least one memory 1214. The DU 1210 is mainly configured to: receive and transmit a radio frequency signal, perform conversion between the radio frequency signal and a baseband signal, and perform partial baseband processing. The CU 1220 may include at least one processor 1222 and at least one memory 1221. The CU 1220 and the DU 1210 may communicate with each other through an interface. A control plane (control plane, CP) interface may be Fs-C, for example, F1-C, and a user plane (user plane, UP) interface may be Fs-U, for example, F1-U.

The CU 1220 is mainly configured to: perform baseband processing, control a base station, and the like. The DU 1210 and the CU 1220 may be physically disposed together, or may be physically separated, namely, in a distributed base station. The CU 1220 is a control center of the base station, may also be referred to as a processing unit, and is mainly configured to implement a baseband processing function. For example, the CU 1220 may be configured to control the base station to perform an operation procedure related to the access network device in the foregoing method embodiments.

In an instance, the CU 1220 may include one or more boards. A plurality of boards may jointly support a radio access network (for example, a 5G network) with a single access standard, or may separately support radio access networks (for example, an LTE network, a 5G network, or another network) with different access standards. The memory 1221 and the processor 1222 may serve one or more boards. In other words, a memory and a processor may be disposed on each board. Alternatively, a plurality of boards may share a same memory and a same processor. In addition, a necessary circuit may further be disposed on each board. The DU 1210 may include one or more boards. A plurality of boards may j ointly support a radio access network (for example, a 5G network) with a single access standard, or may separately support radio access networks (for example, an LTE network, a 5G network, or another network) with different access standards. The memory 1214 and the processor 1213 may serve one or more boards. In other words, a memory and a processor may be disposed on each board. Alternatively, a plurality of boards may share a same memory and a same processor. In addition, a necessary circuit may further be disposed on each board.

It should be understood that the base station 1200 shown in FIG. 12 is merely a possible architecture of the access network device, and should not constitute any limitation on this application. The method provided in this application is applicable to an access network device having another architecture, for example, an access network device including a CU, a DU, and an active antenna unit (active antenna unit, AAU). A specific architecture of the access network device is not limited in this application.

This application further provides a communication system, including the foregoing management unit, at least one computing node, and request node.

This application further provides a chip system. The chip system includes at least one processor, configured to implement functions in the method in the embodiment shown in FIG. 8 or FIG. 9, for example, receive or process data and/or information in the foregoing method.

In a possible design, the chip system further includes a memory, the memory is configured to store program instructions and data, and the memory is located inside or outside the processor.

The chip system may include a chip, or may include a chip and another discrete component.

This application further provides a computer-readable storage medium. The computer storage medium stores a computer program (which may also be referred to as code or instructions). When the computer program is run by a processor, the method in the embodiment shown in FIG. 8 or FIG. 9 is performed.

This application further provides a computer program product. The computer program product includes a computer program (which may also be referred to as code or instructions). When the computer program is run, a computer is enabled to perform the method in the embodiment shown in FIG. 8 or FIG. 9.

It should be noted that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Terms such as "unit" and "module" used in this specification may indicate computer-related entities, hardware, firmware, combinations of hardware and software, software, or software being executed. The units and the modules in embodiments of this application have a same meaning, and may be used in a cross manner.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In several embodiments provided in this application, it should be understood that the disclosed apparatuses, devices, and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In the foregoing embodiments, all or some of the functions of the function units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, through a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), or a semiconductor medium (for example, a solid state drive (solid state drive, SSD)), or the like.

When functions provided in embodiments of this application are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A computing task processing method, applied to a management unit, wherein the method comprises:
determining, based on task requirement information and/or task characteristic information of N computing tasks and a computing power status and/or a network status of at least one computing node, one or more target computing nodes in the at least one computing node and at least one computing task in the N computing tasks to be executed by each target computing node, wherein N is an integer greater than or equal to 1; and
sending identification information of the corresponding at least one computing task to each target computing node in the one or more target computing nodes.

2. The method according to claim 1, wherein the management unit is deployed in at least one type of the following device: a terminal device, an access network device, a core network device, or a mobile edge computing platform.

3. The method according to claim 2, wherein the at least one computing node comprises at least one type of the following: a terminal device, an access network device, a core network device, a mobile edge computing platform on an access network side, or a mobile edge computing platform on a core network side.

4. The method according to claim 3, wherein the management unit is deployed in a core network device, and the management unit is configured to manage a computing resource on at least one type of the following computing node: a terminal device, an access network device, a mobile edge computing platform on an access network side, or a mobile edge computing platform on a core network side; or
the management unit is deployed in an access network device, and the management unit is configured to manage a computing resource on at least one type of the following computing node: a terminal device, an access network device, or a mobile edge computing platform on an access network side; or
the management unit is deployed in a mobile edge computing platform, and the management unit is configured to manage a computing resource on at least one type of the following computing node: a terminal device, a mobile edge computing platform on an access network side, or a mobile edge computing platform on a core network side.

5. The method according to any one of claims 1 to 4, wherein a computing power status of each computing node is measured by using at least one of the following: a type of a computing resource provided by the computing node, a computing power value, a location of the computing node, a supported task type, a joint service capability, or resource utilization.

6. The method according to any one of claims 1 to 5, wherein the task requirement information comprises at least one of the following: a task type, an end-to-end delay, quality of service QoS, an extended reality quality index, quality of experience, or a computing power requirement.

7. The method according to any one of claims 1 to 6, wherein the task characteristic information comprises at least one of the following: a frame rate, a bit rate, a resolution, a relative location relationship between an I-frame and a P-frame, an image or video distortion degree, an image or video distortion type, or artificial intelligence model precision.

8. The method according to any one of claims 1 to 7, wherein the method further comprises:
receiving a computing request from a request node, wherein the computing request carries the task requirement information and/or the task characteristic information of the N computing tasks; and
the method further comprises:
sending the task requirement information and/or the task characteristic information to each target computing node in the one or more target computing nodes.

9. The method according to claim 8, wherein the computing request further carries split indication information of a first computing task, the split indication information is used by the management unit to split the first computing task into a plurality of second computing tasks, the first computing task is a computing task that is not split, and the second computing task is a computing task obtained through splitting.

10. The method according to claim 8 or 9, wherein the N computing tasks comprise one first computing task and/or a plurality of second computing tasks.

11. The method according to any one of claims 1 to 10, wherein before determining the one or more target computing nodes in the at least one computing node and the at least one computing task in the N computing tasks to be executed by each target computing node, the method further comprises:
sending a query request to each computing node in the at least one computing node, wherein the query request is used to request to query a computing power status and/or a network status of the computing node; and
receiving a query response from each computing node, wherein the query response carries the computing power status and/or the network status of the computing node.

12. The method according to any one of claims 1 to 11, wherein the method further comprises:
sending first information to the request node, wherein the first information indicates each target computing node in the one or more target computing nodes and identification information of at least one computing task corresponding to each target computing node.

13. The method according to any one of claims 1 to 12, wherein the method further comprises:
sending second information to a first computing node in the one or more target computing nodes, wherein the second information is used to determine a next-hop node of the first computing node, the next-hop node of the first computing node is configured to execute a computing task based on a computing result output by the first computing node, and the first computing node is any one of the one or more target computing nodes.

14. The method according to any one of claims 1 to 13, wherein the method further comprises:
obtaining at least one type of the following information: real-time application experience information, real-time application characteristic information, or real-time network status information; and
sending indication information to a second computing node in the one or more target computing nodes based on the at least one type of information, wherein the indication information is used by the second computing node to adjust a related application configuration parameter and/or a related network configuration parameter, wherein
the real-time application experience information comprises at least one of the following: an end-to-end delay, QoS, an extended reality quality index, or quality of experience;
the real-time application characteristic information comprises at least one of the following: a frame rate, a bit rate, a resolution, a relative location relationship between an I-frame and a P-frame, an image or video distortion degree, an image or video distortion type, or artificial intelligence model precision;
the real-time network status information comprises at least one of the following: channel status information between the computing node and the request node, a transmission rate, a throughput, a transmission delay, a network congestion status, an available bandwidth, or a status of an interface between nodes;
the related application configuration parameter comprises any one of the following: a frame rate, a bit rate, a resolution, a sending location of an I-frame and/or a P-frame, an image or video distortion degree, or an image or video distortion type; and
the related network configuration parameter comprises any one of the following: a bit rate, a throughput, a transmission delay, a priority, or a bandwidth.

15. The method according to claim 14, wherein sending the indication information to the second computing node in the one or more target computing nodes based on the at least one type of information comprises:
when the at least one type of information meets a preset condition, sending the indication information to the second computing node in the one or more target computing nodes, wherein
the preset condition comprises at least one of the following: a parameter in the real-time application experience information is less than a first threshold, a parameter in the real-time application characteristic information is less than a second threshold, or a parameter in the real-time network status information is less than a third threshold.

16. The method according to claim 14 or 15, wherein one or more of the at least one type of information comes from at least one of the one or more target computing nodes, or one or more of the at least one type of information comes from the request node.

17. A computing task processing method, comprising:
determining a computing power status and/or a network status of a computing node, wherein the computing power status and/or the network status are/is used to determine one or more target computing nodes in at least one computing node and at least one computing task in N computing tasks to be executed by each target computing node and requested by a requesting node, wherein N is an integer greater than or equal to 1; and
sending the computing power status and/or the network status of the computing node to a management unit.

18. The method according to claim 17, wherein the method further comprises:
when the computing node is a target computing node, receiving identification information of at least one computing task corresponding to the computing node from the management unit.

19. The method according to claim 18, wherein the method further comprises:
obtaining computing data and third information of the at least one computing task; and
executing the at least one computing task based on the computing data and the third information, wherein the third information comprises task requirement information and/or task characteristic information.

20. The method according to claim 19, wherein the task requirement information comprises at least one of the following: an end-to-end delay, quality of service QoS, an extended reality quality index, quality of experience, or a computing power requirement.

21. The method according to claim 19 or 20, wherein the task characteristic information comprises at least one of the following: a frame rate, a bit rate, a resolution, a relative location relationship between an I-frame and a P-frame, an image or video distortion degree, an image or video distortion type, or artificial intelligence model precision.

22. The method according to any one of claims 19 to 21, wherein the task requirement information and the task characteristic information are carried in a computing request sent by the request node to the management unit.

23. The method according to any one of claims 18 to 22, wherein the method further comprises:
receiving second information from the management unit, wherein the second information is used to determine a next-hop node of the computing node, and the next-hop node of the computing node is configured to execute a computing task based on a computing result output by the computing node.

24. The method according to any one of claims 17 to 23, wherein a computing power status of the computing node is measured by using at least one of the following: a type of a computing resource provided by the computing node, a computing power value, a location of the computing node, a supported task type, a joint service capability, or resource utilization.

25. The method according to any one of claims 17 to 24, wherein sending the computing power status and/or the network status of the computing node to the management unit comprises:
receiving a query request from the management unit, wherein the query request is used to request to query the computing power status and/or the network status of the computing node; and
sending a query response to the management unit, wherein the query response carries the computing power status and/or the network status of the computing node.

26. The method according to any one of claims 17 to 25, wherein the method further comprises:
sending at least one type of the following information to the management unit: real-time application experience information, real-time application characteristic information, or real-time network status information, wherein
the real-time application experience information comprises at least one of the following: an end-to-end delay, QoS, an extended reality quality index, or quality of experience;
the real-time application characteristic information comprises at least one of the following: a frame rate, a bit rate, a resolution, a relative location relationship between an I-frame and a P-frame, an image or video distortion degree, an image or video distortion type, or artificial intelligence model precision;
the real-time network status information comprises at least one of the following: channel status information between the computing node and the request node, a transmission rate, a throughput, a transmission delay, a network congestion status, an available bandwidth, or a status of an interface between nodes.

27. The method according to claim 26, wherein the method further comprises:
when the at least one type of information meets a preset condition, receiving indication information from the management unit, wherein the indication information is used by the computing node to adjust a related application configuration parameter and/or a related network configuration parameter; and
adjusting the related application configuration parameter and/or the related network configuration parameter based on the indication information, wherein
the related application configuration parameter comprises any one of the following: a frame rate, a bit rate, a resolution, a sending location of an I-frame and/or a P-frame, an image or video distortion degree, or an image or video distortion type; and
the related network configuration parameter comprises any one of the following: a bit rate, a throughput, a transmission delay, a priority, or a bandwidth.

28. The method according to claim 27, wherein the preset condition comprises at least one of the following: a parameter in the real-time application experience information is less than a first threshold, a parameter in the real-time application characteristic information is less than a second threshold, or a parameter in the real-time network status information is less than a third threshold.

29. A computing task processing method, comprising:
sending a computing request to a management unit, wherein the computing request carries task requirement information and/or task characteristic information of N computing tasks, and N is an integer greater than or equal to 1;
receiving first information from the management unit, wherein the first information indicates each target computing node in one or more target computing nodes and identification information of at least one computing task corresponding to each target computing node, and each target computing node is configured to execute the corresponding at least one computing task; and
sending computing data of the corresponding at least one computing task to the one or more target computing nodes based on the first information.

30. The method according to claim 29, wherein the method further comprises:
sending application information to the one or more target computing nodes.

31. The method according to claim 29 or 30, wherein the computing request further carries split indication information of a first computing task, the split indication information is used by the management unit to split the first computing task into a plurality of second computing tasks, the first computing task is a computing task that is not split, and the second computing task is a computing task obtained through splitting.

32. The method according to claim 31, wherein the N computing tasks comprise one first computing task and/or a plurality of second computing tasks, the first computing task is a computing task that is not split, and the second computing task is a computing task obtained through splitting.

33. The method according to any one of claims 29 to 32, wherein the method further comprises:
sending at least one type of the following information to the management unit: real-time application experience information, real-time application characteristic information, or real-time network status information, wherein
the real-time application experience information comprises at least one of the following: an end-to-end delay, quality of service QoS, an extended reality quality index, or quality of experience;
the real-time application characteristic information comprises at least one of the following: a frame rate, a bit rate, a resolution, a relative location relationship between an I-frame and a P-frame, an image or video distortion degree, an image or video distortion type, or artificial intelligence model precision; and
the real-time network status information comprises at least one of the following: channel status information between a computing node and a request node, a transmission rate, a throughput, a transmission delay, a network congestion status, an available bandwidth, or a status of an interface between nodes.

34. A computing task processing apparatus, comprising a unit configured to implement the method according to any one of claims 1 to 16, a unit configured to implement the method according to any one of claims 17 to 28, or a unit configured to implement the method according to any one of claims 29 to 33.

35. A computing task processing apparatus, comprising a processor and a memory, wherein
the memory is configured to store a computer program; and
the processor is configured to invoke the computer program, so that the apparatus performs the method according to any one of claims 1 to 16, the method according to any one of claims 17 to 28, or the method according to any one of claims 29 to 33.

36. A computer-readable storage medium, wherein the storage medium stores a computer program or instructions, and when the computer program or the instructions are executed by a computer, the method according to any one of claims 1 to 16, the method according to any one of claims 17 to 28, or the method according to any one of claims 29 to 33 is implemented.

37. A computer program product, wherein the computer program product comprises instructions, and when the instructions are run by a computer, the method according to any one of claims 1 to 16, the method according to any one of claims 17 to 28, or the method according to any one of claims 29 to 33 is implemented.
